(19) **Europäisches Patentamt**

**European Patent Office**

**Office européen des brevets**

(11) **EP 1 253 491 B1**

(12) **EUROPÄISCHE PATENTSCHRIFT**

| | |
|---|---|
| (45) Veröffentlichungstag und Bekanntmachung des Hinweises auf die Patenterteilung:<br>**02.08.2006  Patentblatt 2006/31** | (51) Int Cl.:<br>**G05B 13/02** *(2006.01)*    **G05B 17/02** *(2006.01)* |

(21) Anmeldenummer: **02008115.4**

(22) Anmeldetag: **11.04.2002**

(54) **Hybridmodell und Verfahren zur Bestimmung von mechanischen Eigenschaften und von Verarbeitungseigenschaften eines Spritzgiessformteils**

Hybrid model and method for determining the mechanical properties and processing properties of an injection moulded article

Modèle hybride et procédé de détermination des propriétés mecaniques et des propriétés de traitement d' un article moulé par injection

| | |
|---|---|
| (84) Benannte Vertragsstaaten:<br>**AT BE CH CY DE DK ES FI FR GB GR IE IT LI LU MC NL PT SE TR** | • **Mrziglod, Thomas, Dr.**<br>  **51467 Bergisch Gladbach (DE)**<br>• **Salewski, Klaus, Dr.**<br>  **47802 Krefeld (DE)**<br>• **Loosen, Roland, Dr.**<br>  **50374 Erftstadt (DE)**<br>• **Wanders, Martin, Dr.**<br>  **51519 Odenthal-Neschen (DE)** |
| (30) Priorität: **24.04.2001  DE 10119853** | |
| (43) Veröffentlichungstag der Anmeldung:<br>**30.10.2002  Patentblatt 2002/44** | |
| (73) Patentinhaber: **Bayer MaterialScience AG**<br>**51368 Leverkusen (DE)** | (56) Entgegenhaltungen:<br>**EP-A- 1 041 264    WO-A-00/20939**<br>**WO-A-98/20437    DE-A- 19 514 535**<br>**DE-A- 19 743 600** |
| (72) Erfinder:<br>• **Sarabi, Bahman, Dr.**<br>  **47803 Krefeld (DE)** | |

**Beschreibung**

Die Erfindung betrifft ein neuronales Netzwerk und ein Verfahren zur Bestimmung von Eigenschaften hinsichtlich der Herstellung eines Spritzgießformteils.

Aus der US-A 5 914 884 ist ein Verfahren zur Bewertung der Eigenschaften eines Kunststoffmaterials in einem Kunststoffspritzverfahren bekannt. Ein empirisches Modell dient zur Beschreibung der Beziehung zwischen Prozessvariablen und einer Mehrzahl von Qualitätscharakteristiken. Das empirische Modell wird anhand von mittels eines Kunststoffspritzprozesses ermittelten empirischen Daten erstellt. Einer der Nachteile dieses Verfahrens besteht in den praktischen Schwierigkeiten und dem erforderlichen Aufwand für die Erstellung des empirischen Modells.

DE 195 14 535 A offenbart ein Verfahren zur Überwachung und Regelungen von Herstellprozessen von Spritzgussteilen, bei dem ein so genanntes, nicht näher spezifiziertes Prognosemodell zum Einsatz kommt.

EP 1 041 264 A1 beschreibt ein Hybridmodell, das zur Simulation von Kraftfahrzeugprozessen genutzt wird, bei denen mehrere Simulationen separat durchgeführt werden, deren Ergebnisse danach zusammengeführt werden.

Der Erfindung liegt daher die Aufgabe zu Grunde, ein verbessertes Verfahren, mit neuronalem Netzwerk, zur Bestimmung einer oder mehrer Eigenschaften hinsichtlich der Herstellung Spritzgießformteils zu schaffen.

Die der Erfindung zu Grunde liegende Aufgabe wird jeweils mit den Merkmalen der unabhängigen Patentansprüche gelöst. Bevorzugte Ausführungsformen der Erfindung sind in den abhängigen Patentansprüchen angegeben.

Die Erfindung erlaubt die Prognose verschiedener Eigenschaften hinsichtlich der Herstellung eines Spritzgießformteils und zwar sowohl hinsichtlich des Spritzgießverfahrens als auch hinsichtlich der Eigenschaften des resultierenden Spritzgießformteils.

Insbesondere ist die Prognose von Prozesszeiten und Verarbeitungseigenschaften beim Spritzgießen von Kunststoff-Formteilen von großer praktischer Bedeutung, da die Herstellungskosten von Spritzgießformteilen maßgeblich durch die Produktivität der Spritzgießfertigung beeinflusst werden. Der charakteristische Parameter ist hierbei die Prozesszeit der Spritzgießmaschine für die Herstellung eines Formteils.

Eine Berechnung der Prozesszeit erfordert nicht nur eine Charakterisierung der materialspezifischen Eigenschaften durch den Rohstoffhersteller, sondern auch die Berücksichtigung des kundenspezifischen Anwendungsfalls (Geometrie, Werkzeug). Die entsprechenden Prozesszeiten ergeben sich so aus dem Zusammenspiel von Materialeigenschaften, den Prozessparametern der Spritzgießmaschine und der Konstruktion des Spritzgießwerkzeugs.

Diese komplexen Zusammenhänge können mit Hilfe von neuronalen Netzen abgebildet werden. Die neuronalen Netze werden durch rigorose Rechenmodelle ergänzt, die mit dem neuronalen Netz verschaltet werden. Beispielsweise kann die Berechnung der Plastifizierleistung unter Berücksichtigung der Schneckengeometrie der eingesetzten Spritzgießmaschine in einem solchen rigorosen Rechenmodell erfolgen.

Die umfassende Modellierung des Spritzgießprozesses ermöglicht über die Prozesszeitprognose hinaus eine Vielzahl von Aussagen über wichtige Qualitätsmerkmale des Spritzgießformteils. Unter Berücksichtigung der Prozessführung können beispielsweise die Maßhaltigkeit der Formteile, die Elastizitätsmodule, die Bruchspannungen und -dehnungen in Abhängigkeit von Fließrichtung und Wanddicke, die Wärmeformbeständigkeit und weitere Werkstoffeigenschaften prognostiziert werden.

Ein besonderer Vorteil der Erfindung besteht darin, dass diese Prognosen über den Spritzgießprozess und die zu erwartenden Formteileigenschaften vom Anwender ohne Spezialkenntnisse realisierbar sind. Von besonderem Vorteil ist dabei der Einsatz der Erfindung für die Projektierung neuer Spritzgießanwendungen. Das erfindungsgemäße hybride neuronale Netzwerk erlaubt bereits in einer frühesten Planungsphase durch eine einfach durchführbare Computersimulation die Machbarkeit eines neuen Projekts zu prüfen. Dies ist insbesondere von großer Bedeutung für die Reduzierung der sogenannten "time to market" Phase.

Ferner erlaubt es die Erfindung zur rechnerischen Bauteilauslegung dem Konstrukteur die geeigneten Werkstoffkennwerte durch Prognose mittels des erfindungsgemäßen hybriden Modells zur Verfügung zu stellen. Aufgrund eines komplexen Materialverhaltens von Kunststoffen können solche Werkstoffkennwerte unerlässlich sein für eine sichere Bauteilauslegung. Die Erfindung erlaubt es, solche Werkstoffkennwerte ohne die Durchführung von Versuchsreihen oder dergleichen zu ermitteln.

Ferner erlaubt die Erfindung auch eine Prognose hinsichtlich der für ein gewünschtes Formteil erforderlichen Maschinen- und Prozessparameter der Kunststoffspritzgießmaschine. Damit lässt sich auch vorab prüfen, ob ein bestimmtes Teil auf einer vorhandenen Spritzgießmaschine überhaupt herstellbar ist.

Im Weiteren wird eine Ausführungsform der Erfindung mit Bezugnahme auf die Zeichnungen näher erläutert. Es zeigen:

Fig. 1    ein Blockdiagramm einer Ausführungsform des erfindungsgemäßen hybriden Modells,

Fig. 2    eine Anwendung des hybriden neuronalen Netzes der Fig. 1,

Fig. 3    eine Vorrichtung zur Bestimmung von Reibungskoeffizienten

Fig. 4    einen mit der Vorrichtung der Fig. 3 gemessenen zeitlichen Drehmomentverlauf,

Fig. 5    einen entsprechenden Drehmomentverlauf bei einer bestimmten Werkzeugtemperatur,

Fig. 6    einen Verlauf von gemessenen Haft- und Gleitreibungskoeffizienten in Abhängigkeit von der Werkzeugtemperatur,

Fig. 7    den Verlauf der mit der Vorrichtung der Fig. 3 bestimmten Haft- und Gleitreibungskoeffizienten in Abhängigkeit von der Flächenpressung,

Fig. 8    einen mit der Vorrichtung der Fig. 3 herstellbaren Prüfkörper.

Fig. 9    eine aus dem Stand der Technik bekannte Typisierung von Spannungs-Dehnungs-Kurven,

Fig. 10   ein Flussdiagramm einer Ausführungsform des erfindungsgemäßen Verfahrens zur Erstellung eines neuronalen Netzes,

Fig. 11   eine Darstellung der Schrittfolge, um aus einer Spannungs-Dehnungs-Kurve die Hauptkomponenten der charakteristischen Punkte zu ermitteln,

Fig. 12   ein Blockdiagramm zum trainieren der neuronalen Netze,

Fig. 13   ein Blockdiagramm eines neuronalen Netzes zur Bestimmung einer Spannungs-Dehnungs-Kurve aufgrund von Eingabeparametern,

Fig. 14   eine Darstellung der Auswahl der charakteristischen Punkte aus einer Spannungs-Dehnungs-Kurve,

Fig. 15   eine Darstellung der Randbedingungen für die Generierung von Spannungs-Dehnungs-Kurven aus charakteristischen Punkten,

Fig. 16   eine Darstellung der Stabilisierung der Splineinterpolation mittels einer logarithmischen Skalierung auf einem Teilintervall.

Fig. 17   eine Kurvenschar von Spannungs-Dehnungs-Kurven für verschiedene Temperaturen bei einer Kurzzeit-Zugbelastung,

Fig. 18   eine schematische Darstellung einer Potenzfunktion nach Findley für einen Zeitstandversuch,

Fig. 19   die Ermittlung eines approximierten Kurvenverlaufs für die Dehnung in Abhängigkeit der Zeit für die Potenzfunktion nach Findley,

Fig. 20   die Verläufe der Koeffizienten $n\,(\sigma)$ und $m\,(\sigma)$ in Abhängigkeit von der Spannung im Zeitstandversuch für eine bestimmte Temperatur,

Fig. 21   die zur Approximation der spannungsabhängigen Verläufe der Koeffizienten m und n verwendeten Funktionen und die Ermittlung der Koeffizienten dieser Funktionen jeweils für eine bestimmte Temperatur $T_1$, $T_2$ und $T_3$,

Fig. 22   den Verlauf des Koeffizienten $m\,(\sigma)$ für drei verschiedene Temperaturen,

Fig. 23   den Verlauf des Koeffizienten $n\,(\sigma)$ für drei verschiedene Temperaturen,

Fig. 24   die sich aus den Verläufen $n\,(\sigma)$ und $m\,(\sigma)$ ergebenden temperaturabhängigen Verläufe der Koeffizienten $a_1$, $a_2$ sowie $b_0$, $b_1$ und $b_2$,

Fig. 25   die zur Ermittlung der Spannungs-Dehnungs-Kurvenschar in Abhängigkeit von der Temperatur und der Belastungsdauer der Spannung erforderlichen Schritte,

Fig. 26      eine Detaildarstellung der Schritte der Figur 25 anhand eines bevorzugten Ausführungsbeispiels,

Fig. 27      eine Darstellung von tatsächlichem und errechneten Dehnungsverläufen für einen Zeitstandversuch,

Fig. 28      den nicht-linearen Anfangsbereich der Dehnung in einem Zeitstandversuch über der Belastungsdauer.

Fig. 29      die Schritte zur Erzeugung einer Datenbank für das Training des neuronalen Netzes und

Fig. 30      das Training der in dem hybriden neuronalen Netz beinhaltenden neuronalen Netze.

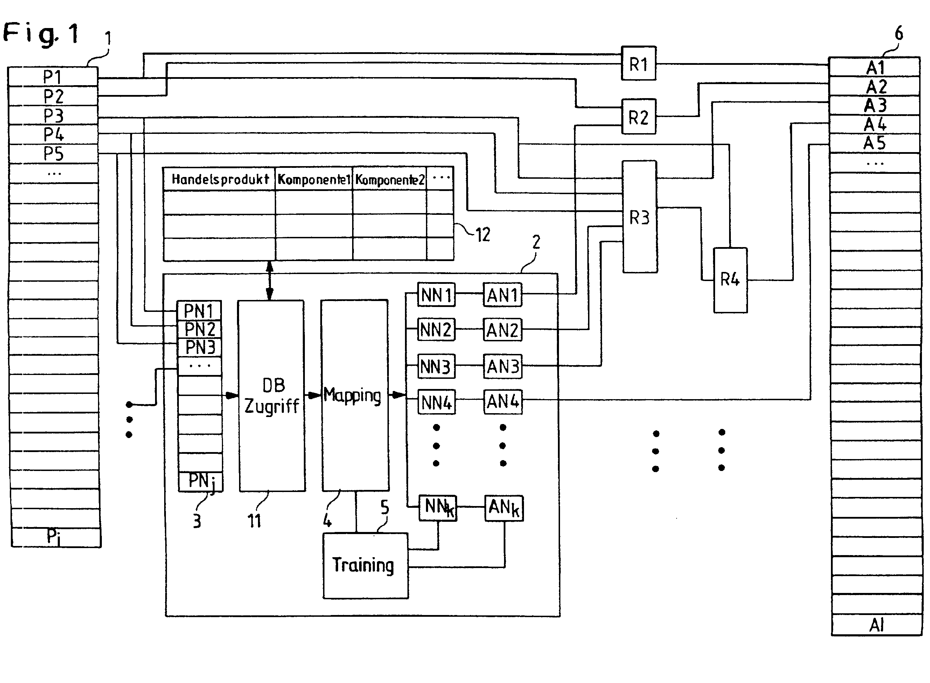

Das hybride neuronale Netz der Fig. 1 hat einen Eingang 1 zur Eingabe von Parametern P1, P2, P3... $P_i$. Bei diesen Parametern kann es sich um Stoff- oder Rezepturparameter handeln, beispielsweise zur Spezifizierung von Handelsprodukten aus zusammengesetzten Rezepturen, und/oder um Prozess- und Maschinenparameter hinsichtlich des Spritzgießvorgangs bzw. der Spritzgießmaschine und/oder um Konstruktions- und Formteilparameter, beispielsweise hinsichtlich der Wanddicke des Formteils und der Fließlänge.

In dem hier betrachteten Ausführungsbeispiel dient der Eingang 1 zur Eingabe unter anderem der nachfolgenden Parameter:

| Formteilparameter | Rezeptur | Prozessparameter | Maschinenparameter |
|---|---|---|---|
| Probendicke, Formteilvolumen, kundenspezifische Fliessweglänge ... | Pocan, Glasfaser, Makrolon, Zitronensäure, Paraloid, Talcum ... | Massetemperatur, Werkzeugtemperatur, Nachdruck | Schergeschwindigkeit, Einspritzgeschwindigkeit, Schneckendurchmesser, Gangsteigung der Meteringzone, Gangtiefe der Meteringzone, Kanalbreite der Meteringzone, Länge der Meteringzone, Staudruck, Schneckendrehzahl |

Ferner weist das hybride Modell ein neuronales Netzmodul 2 auf. Das neuronale Netzmodul 2 hat einen Eingang 3 zur Eingabe von Parametern PN1, PN2, PN3 ... $PN_j$. Der Eingang 3 ist mit dem Eingang 1 verbunden, so dass einige der Parameter P1 bis $P_i$ des Eingangs 1 auch in den Eingang 3 des neuronalen Netzmoduls 2 eingegeben werden.

Aufgrund einer entsprechenden Verbindung zwischen dem Eingang 3 und dem Eingang 1 ist daher der Eingangsparameter PN1 des neuronalen Netzmoduls 2 identisch mit dem Parameter P3 des Eingangs 1 des hybriden Modells. Ebenso sind die Parameter PN2 und P4 sowie PN3 und P5 in dem gezeigten Beispiel identisch.

Die Parameter PN1 bis $PN_j$ bilden daher eine Teilmenge der Parameter P1 bis $P_i$. Die weiteren entsprechenden Verschaltungen zwischen dem Eingang 1 und dem Eingang 3 sind in der Fig. 1 der Übersichtlichkeit halber nicht im Detail dargestellt.

Der Eingang 3 des neuronalen Netzmoduls 2 ist mit einem Abbildungsmodul 4 verbunden. Das Abbildungsmodul 4 ist seinerseits mit den neuronalen Netzen NN1, NN2, NN3, NN4, ...$NN_k$ verbunden. Jedes der neuronalen Netze NN1 bis $NN_k$ hat einen entsprechenden Ausgang AN1 bis $AN_k$.

Jedes der neuronalen Netze NN1 bis $NN_k$ ist für die Prognose einer bestimmten Eigenschaft trainiert, die über den entsprechenden Ausgang ausgegeben wird, wenn an dem Eingang des betreffenden neuronalen Netzes die erforderlichen Eingangsparameter angelegt werden. Die Anzahl der erforderlichen Eingangsparameter kann dabei unterschiedlich sein.

Um die für ein bestimmtes neuronales Netz erforderlichen Eingangsparameter an den Eingang dieses Netzes anzulegen, führt das Abbildungsmodul 4 entsprechende Transformationen des aus den Parametern PN1 bis $PN_j$ bestehenden Parametervektors des Eingangs 3 aus. Wenn beispielsweise das neuronale Netz NN1 lediglich die Eingangsparameter PN1, PN2 und PN3 benötigt, nicht aber die weiteren Parameter PN4 bis $PN_j$, so sorgt das Abbildungsmodul 4 dafür, dass an dem Eingang des neuronalen Netzes NN1 lediglich die Parameter PN1 bis PN3 anstehen. Entsprechendes gilt für die weiteren neuronalen Netze. Die Abbildung oder "mapping" kann durch Multiplikation des Parametervektors des Eingangs 3 jeweils mit einer bestimmten auf das betreffende neuronale Netz angepasste Matrix durchgeführt werden.

Das neuronale Netzmodul 2 hat ferner ein Trainingsmodul 5, welches in einem Trainingsmodus des neuronalen Netzmoduls 2 aktiv ist. Das Trainingsmodul 5 ist mit dem Abbildungsmodul 4 und mit den neuronalen Netzen NN1 bis

NN$_k$ sowie deren entsprechenden Ausgängen jeweils verbunden. Das Training der einzelnen neuronalen Netze kann dabei sequentiell erfolgen, dass heißt die einzelnen neuronalen Netze werden unabhängig voneinander durch Anlegen verschiedener Eingangsparameter unter Kontrolle des Trainingsmoduls 5 in an sich bekannter Art und Weise trainiert.

Dazu eignet sich beispielsweise das sogenannte back-propagation Verfahren oder das Programm "NN-Tool 2000", welches kommerziell erhältlich ist von Professor Frank Bärmann, Fachhochschule Gelsenkirchen, Fachbereich physikalische Technik. Das entsprechende Trainingsverfahren ist auch in der Publikation "Neural Network", Volume 5, Seiten 139 bis 144, 1992, "On a class of efficient learning algorithms for neural networks", Frank Bärmann, Friedrich Biegler-König, beschrieben.

Zwischen dem Eingang 3 und dem Abbildungsmodul 4 kann sich ein weiteres Modul 11 befinden. Das Modul 11 dient zum Zugriff auf eine Datenbank 12. Die Datenbank 12 beinhaltet für jedes Handelsprodukt die Komponenten (Komponente 1, Komponente 2, ...) aus der sich das entsprechende Handelsprodukt zusammensetzt sowie die entsprechenden Prozentangaben oder Mischungsverhältnisse.

Am Eingang 3 werden Rezepturparameter, wie z.B. Handelproduktnamen, eingegeben. Mit einemHandelsprodukt als Schlüssel greift das Modul 11 dann auf die Datenbank 12 zu, um die entsprechenden Komponenten und deren Rezepturanteile zu ermitteln. Die so ermittelten Komponenten dienen dann zusammen mit den weiteren nicht die Rezeptur betreffenden Parametern des Eingangs 3 als Eingänge für das Abbildungsmodul 4.

Das hybride neuronale Netz hat ferner eine Anzahl von rigorosen Modellen R1, R2, R3, R4,... . Bei den rigorosen Modellen handelt es sich um Teilmodelle, die sich mittels mathematischer Formeln darstellen lassen. Diejenigen Teile des Modells, für die sich solche mathematischen Formeln nicht angeben lassen, werden mittels des neuronalen Netzmoduls 2 erfasst. Die rigorosen Modelle können untereinander und mit dem neuronalen Netzmodul verschaltet sein.

In dem gezeigten Ausführungsbeispiel ist das rigorose Modell R1 lediglich mit dem Eingang 1, aber nicht mit anderen rigorosen Modellen oder einem Ausgang des neuronalen Netzmoduls 2 verbunden. Der Ausgang des rigorosen Modells R1 ist mit dem Ausgang A1 des Ausgangs 6 verbunden.

Das rigorose Modell R2 hingegen ist mit dem Parameter P1 des Eingangs 1 sowie mit dem Ausgang AN1 des neuronalen Netzmoduls 2 verbunden. Der Ausgang des rigorosen Modells R2 ist mit dem Ausgang A2 verbunden.

Das rigorose Modell R3 ist mit den Parametern P3, P4 und P5 des Eingangs 1 sowie mit den Ausgängen AN2 und AN3 des neuronalen Netzmoduls 2 verbunden. Der Ausgang des rigorosen Modells R3 ist sowohl mit dem Ausgang A3 als auch mit dem Eingang des rigorosen Modells R4 verbunden. Das rigorose Modell R4 hat einen weiteren Eingang, der mit dem Parameter P3 verbunden ist. Der Ausgang des rigorosen Modells R4 ist mit dem Ausgang A4 verbunden.

In dem betrachteten Ausführungsbeispiel kann es sich bei den Parametern PN1 bis PN$_j$ des Eingangs 3 um die Parameter Rezeptur, Dicke, Massetemperatur, Werkzeugtemperatur, Schergeschwindigkeit und Nachdruck handeln.

Bei den Ausgangsgrößen, die an den Ausgängen AN1 bis AN$_k$ anstehen, kann es sich entsprechend um die Größen Dichte, Siegelzeit, Siegeltemperatur, Entformungstemperatur, Normfülldruck, Nullviskosität, reziproke Übergangsschergeschwindigkeit, Carreausteigung und mechanische Eigenschaften handeln.

Mit den rigorosen Modellen können dann beispielsweise die Formteilmasse, die Formfüllzeit, die effektive Temperaturleitfähigkeit, die Kühlzeit, der Fülldruck, die Dosierzeit, die Prozesszeit sowie weitere mechanische Eigenschaften rechnerisch ermittelt werden.

Entsprechend stehen dann am Ausgang 6 beispielsweise die folgenden Werte zur Verfügung:

| Verarbeitungseigenschaften | mechanische Eigenschaften | thermische Eigenschaften | Prozesszeitprognose | rheologische Eigenschaften |
|---|---|---|---|---|
| Fülldruck, Plastifizierle istung, Haftreibung, Gleitreibung, Schwindung | Elastizitätsmodul (längs, quer), Streckspannung, Streckdehnung, Reißspannung (längs, quer), Reißdehnung (längs, quer), Arbeit bis Streckspannung, Arbeit bis zum Bruch, nominelle Reißdehnung, Biegemodul, Biegespannung, Randfaserdehnung, Biegefestigkeit | Entformungstemperatur, Dichte, non-flow Temperatur, Formteilmasse | Siegelzeit, Prozesszeit, Formfüllzeit (Einspritz-zeit), Dosierzeit, Kühlzeit | Schmelzeviskosität, Carreauparameter, Carreauschmelzeviskosität |

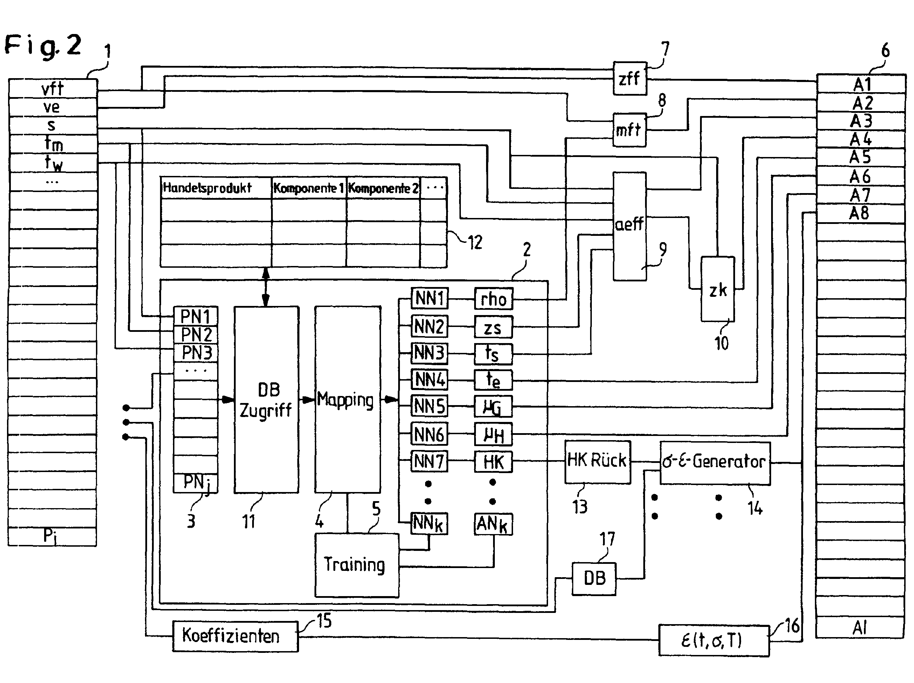

Die Fig. 2 zeigt einen Anwendungsfall des hybriden neuronalen Netzes der Fig. 1. In dem Eingang 1 sind die folgenden Parameter P1 bis P5 exemplarisch gezeigt:

vft =   Formteilvolumen
ve =   Einspritzgeschwindigkeit
s =   Dicke
$t_m$ =   Masse, Temperatur
$t_w$ =   Werkzeugtemperatur

Die weiteren Eingangsparameter des Eingangs 1 sind in der Fig. 2 der Einfachheit halber nicht dargestellt.
Die Parameter vft und ve gehen in das rigorose Modell 7 zur Berechnung der Formfüllzeit ein. In dem rigorosen Modell 7 ist dazu die folgende Formel hinterlegt:

$$zff = \left(\frac{vft}{0.85}\right) \cdot \frac{4}{(ve \cdot s^2 \cdot \pi)}$$

Die mit dem rigorosem Modell 7 berechnete Formfüllzeit zff wird über den Ausgang A1 ausgegeben.
In dem rigorosem Modell 8 zur Berechnung der Formteilmasse mft ist die folgende Formel hinterlegt:

$$mft = vft \cdot rho$$

Dementsprechend sind die Eingänge des rigorosen Modells 8 mit dem Parameter vft des Eingangs 1 bzw. mit dem Ausgang des neuronalen Netzes NN1 verknüpft. Der Ausgang des neuronalen Netzes NN1 liefert die Dichte rho. Aus dem Eingangsparameter vft bzw. den Prognosewert rho berechnet das rigorose Modell 8 dann die Formteilmasse mft, die über den Ausgang A2 ausgegeben wird.
Das rigorose Modell 9 dient zur Berechnung der effektiven Temperaturleitfähigkeit aeff. Zur Berechnung der effektiven Temperaturleitfähigkeit ist in dem rigorosem Modell 9 die folgende Formel hinterlegt:

$$aeff = \frac{s^2}{\pi^2 \cdot zs} \cdot \log\left(\frac{4}{\pi} \cdot \frac{t_m - t_w}{t_s - t_w}\right)$$

Entsprechend ist der Eingang des rigorosen Modells 9 mit den entsprechenden Parametern s, $t_m$ und $t_w$ des Eingangs 1 verbunden. Ferner ist der Eingang des rigorosen Modells 9 auch mit den Ausgängen der neuronalen Netze NN2 und NN3 verbunden, welche die Siegelzeit zs bzw. die Siegeltemperatur $t_s$ als Prognosewerte liefern. Die so ermittelte effektive Temperaturleitfähigkeit aeff wird über den Ausgang A3 von dem rigorosen Modell 9 ausgegeben.
Ferner wird die effektive Temperaturleitfähigkeit aeff auch von dem Ausgang des rigorosen Modells 9 einem Eingang des rigorosen Modells 10 zugeführt. Das rigorose Modell 10 dient zur Berechnung der Kühlzeit zk. Zur Berechnung der Kühlzeit ist in dem rigorosen Modell 10 die folgende Formel hinterlegt:

$$zk = \frac{s^2}{\pi^2 \cdot aeff} \cdot \log\left(\frac{4}{\pi} \cdot \frac{t_m - t_w}{t_e - t_w}\right)$$

Entsprechend hat des rigorose Modell 10 einen weiteren Eingang, der mit dem Parameter s des Eingangs 1 verbunden ist sowie weitere in der Fig. 2 der Übersichtlichkeit halber nicht gezeigte Eingänge, die mit den Eingabeparametern $t_m$ und $t_w$ sowie mit dem Prognosewert $t_e$ des Ausgangs des neuronalen Netzes NN4 verbunden sind. Die aufgrund dieser Eingabeparameter bzw. aufgrund des Prognosewerts und der effektiven Temperaturleitfähigkeit ermittelte Kühlzeit zk wird von dem rigorosen Modell 10 über den Ausgang A4 ausgegeben.

Das hybride neuronale Modell kann weitere rigorose Modelle z.B. für die Berechnung des Fülldrucks für den Anwendungsfall des Kunden, die Berechnung der Dosierzeit, der Prozesszeit sowie die Transformation bestimmter mechanischer Eigenschaften beinhalten. Diese weiteren rigorosen Teilmodelle sind der Übersichtlichkeit halber in der Fig. 2 nicht dargestellt. Entsprechende Berechnungsvorschriften für die Realisierung solcher weiterer rigoroser Teilmodelle sind beispielsweise die Publikationen Anwendungstechnische Information 1104, "optimierte Werkzeugtemperierung", Olaf Zöllner, Bayer AG, Geschäftsbereich Kunststoffe und Schwarzel, F.R., Polymer Mechanik, Springer Verlag Berlin Heidelberg 1990, Seite 362, entnehmbar.

Das Hybridmodell der Fig. 2 hat ferner ein neuronales Netz NN5 zur Prognose eines Gleitreibungskoeffizienten $\mu_G$ sowie eine neuronales Netz NN6 zur Prognose eines Haftreibungskoeffizienten $\mu_H$. Die neuronalen Netze NN5 bzw. NN6 werden mit den Rezepturparametern bzw. der durch das Modul 11 ermittelten entsprechenden Komponenten auf der einen Seite und den resultierenden Reibungsparametern auf der anderen Seite trainiert. Die für dieses Training erforderlichen Werte werden wie folgt ermittelt:

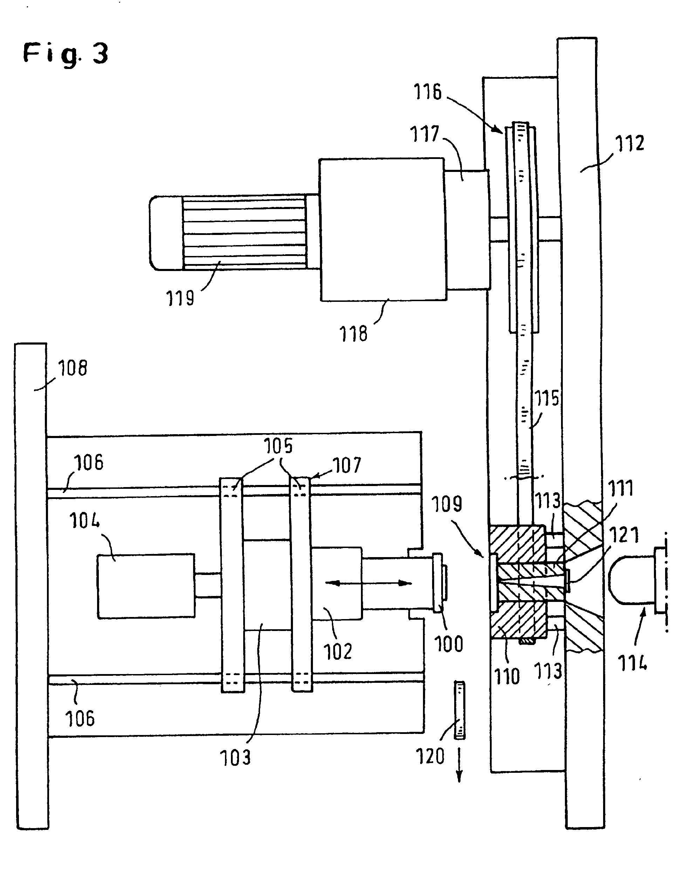

Die Fig. 3 zeigt eine Vorrichtung zur Bestimmung von Haft- und Gleitreibungskoeffizienzen. Zu der Vorrichtung gehören ein Formstempel 100, der mit einem Drehmomentaufnehmer 102 in Verbindung steht. Hinter dem Drehmomentaufnehmer 102 ist ein Normalkraftaufnehmer 103 angeordnet. Über einen Pneumatikzylinder 104 kann eine Kraft auf den Formstempel 101 ausgeübt werden.

Die aus dem Formstempel 101, dem Drehmomentaufnehmer 102, dem Normalkraftaufnehmer 103 und dem Pneumatikzylinder 104 bestehende Anordnung wird durch axial gelagerte Führungen 105 gehalten. Die entsprechenden Führungsholme 106 dienen zur Führung der Führungen 105 sowie zur Aufnahme eines von dem Formstempel 101 auf den Drehmomentaufnehmer 102 übertragenen Drehmoments. Die völlige Aufnahme dieses Drehmoments durch die Führungsholme ist dann erforderlich, wenn der Normalkraftaufnehmer 103 keinen Radialkräften ausgesetzt werden darf.

Die Führungsholme 106 sind an einer Aufspannplatte 108 befestigt. Über eine in der Fig. 3 nicht dargestellte Hydraulik kann auf den Formstempel 101 für das Kunststoffspritzgießen ein hoher Druck ausgeübt werden.

Zu der Vorrichtung gehört ferner ein Formnest 109, welches zusammen mit dem Formstempel 101 ein Kunststoffspritzgießwerkzeug bildet. Zu dem Formnest 109 gehören ein Mitnehmer 110 und eine Angussbuchse 111. Der Mitnehmer 110 und die Angussbuchse 111 sind relativ zueinander in Längsrichtung beweglich; dazu kann zwischen dem Mitnehmer 110 und der Angussbuchse 111 ein Kugel- oder Gleitlager angeordnet sein. Zwischen dem Mitnehmer 110 und einer Aufspannplatte 112 befinden sich elastische Elemente 113, beispielsweise Tellerfedern.

Über eine Plastifiziereinheit 114 kann über die Angussbuchse 111 flüssiger Kunststoff in das geschlossene Kunststoffspritzgießwerkzeug eingeführt werden.

Der Mitnehmer 110 ist zur Aufnahme eines Zahnriemens 115 ausgebildet, der über eine Zahnriemenscheibe 116 über eine Kupplung 117 und ein Getriebe 118 mit einem Elektromotor 119 verbunden ist.

Die Durchführung einer Messung eines Haft- und/oder Gleitreibungskoeffizienten wird folgendermaßen durchgeführt: Zunächst wird das Spritzgießwerkzeug geschlossen, d.h. der Formstempel 101 wird in sein Formnest 109 eingefahren. Dabei werden die elastischen Elemente 113 zwischen dem Mitnehmer 110 und der Aufspannplatte 112 zusammengedrückt. Über die Angussbuchse 111 wird flüssiger Kunststoff in das Spritzgießwerkzeug von der Plastifiziereinheit 114 eingespritzt, wobei - wie bei Kunststoffspritzmaschinen allgemein üblich - über die in der Fig. 3 nicht gezeigte Hydraulik hohe Drücke wirken.

Durch das Einspritzen des flüssigen Kunststoffs in das Spritzgießwerkzeug wird dort ein Prüfkörper aus dem zu untersuchenden Kunststoffmaterial gebildet. Die eigentliche Bestimmung der Haft- und/oder Gleitreibungskoeffizienten kann nach Ablauf einer erforderlichen Kühlzeit, d.h. nach dem Erstarren des Kunststoffes in dem Spritzgießwerkzeug durchgeführt werden.

Dazu wird zunächst der Formstempel 101 um eine geringe Distanz, zum Beispiel 2 mm, zurückbewegt. Dieser Bewegung des Formstempels 101 folgt der Mitnehmer 110 aufgrund der in die Bewegungsrichtung des Formstempels wirkenden Kraft der elastischen Elemente 113. Bei dieser Bewegung des Kunststoffspritzgießwerkzeuges bleibt der Formschluß zwischen dem Formstempel 101 und dem Formnest 109 zu jedem Zeitpunkt erhalten, so dass der Kontakt zwischen dem Prüfkörper 120 und dem Formstempel 101 spritzfrisch bleibt.

Bei der Bewegung des Mitnehmers 110 in Längsrichtung bleibt die Angussbuchse 111 ortsfest, so dass der bei dem Kunststoffspritzgießvorgang entstandene Anguss 121 von dem in dem Spritzgießwerkzeug befindlichen Prüfkörper 120 abreist. Das Abtrennen des Anguss 121 von dem Prüfkörper 120 vor Durchführung der Messungen ist vorteilhaft, um eine Verfälschung des Meßergebnisses durch den Anguss 121 zu vermeiden.

Zur Durchführung der Messung der Haft- und/oder Gleitreibungskoeffizienten des Prüfkörpers 120 in dem Kunststoffspritzgießwerkzeug wird zunächst eine Normalkraft auf den Formstempel 101 aufgebracht, um den Formstempel 101 gegen den Prüfkörper 120 zu drücken. Die von dem Pneumatikzylinder 104 aufgebrachte Normalkraft kann dabei in einem Bereich zwischen 0 und 10 bar, vorzugsweise 5 bis 10 bar liegen. Nach dem Anlegen der Normalkraft wird der Elektromotor 119 eingeschaltet um ein Drehmoment über das Getriebe 118, die Kupplung 117, die Zahnriemenscheibe 116 und den Zahnriemen 115 über den Mitnehmer 110 auf den Prüfkörper 120 zu übertragen. Zur sicheren Übertragung dieses Drehmoments auf den Prüfkörper 120 befindet sich dieser vorzugsweise in Formschluß mit dem Teil der Kavität des Spritzgießwerkzeuges, welches durch den Mitnehmer 110 gebildet wird. Das Getriebe 118 hat vorzugsweise eine Übersetzung von 1 zu 200 um das erforderliche Drehmoment zur Verfügung zu stellen.

Durch das Drehmoment erfährt der Prüfkörper 120 eine definierte Drehbewegung um zum Beispiel 37° um die Mittelachse. Bei dieser Drehbewegung wird das auf den Prüfkörper 120 wirkende Drehmoment auf den Formstempel 101 ganz oder teilweise übertragen. Das übertragende Drehmoment wird von dem Drehmomentaufnehmer gemessen und registriert. Dazu kann der Drehmomentaufnehmer 102 an einen sogenannten Datalogger angeschlossen sein, um den zeitlichen Verlauf des auf den Formstempel 101 von dem Prüfkörper 120 übertragenen Drehmoments zu erfassen. Bei der Drehung des Prüfkörpers 120 erfolgt dabei ein Übergang von der Haft- in die Gleitreibung, was sich in einem charakteristischen zeitlichen Drehmomentverlauf niederschlägt, der von dem Drehmomentaufnehmer 102 gemessen wird.

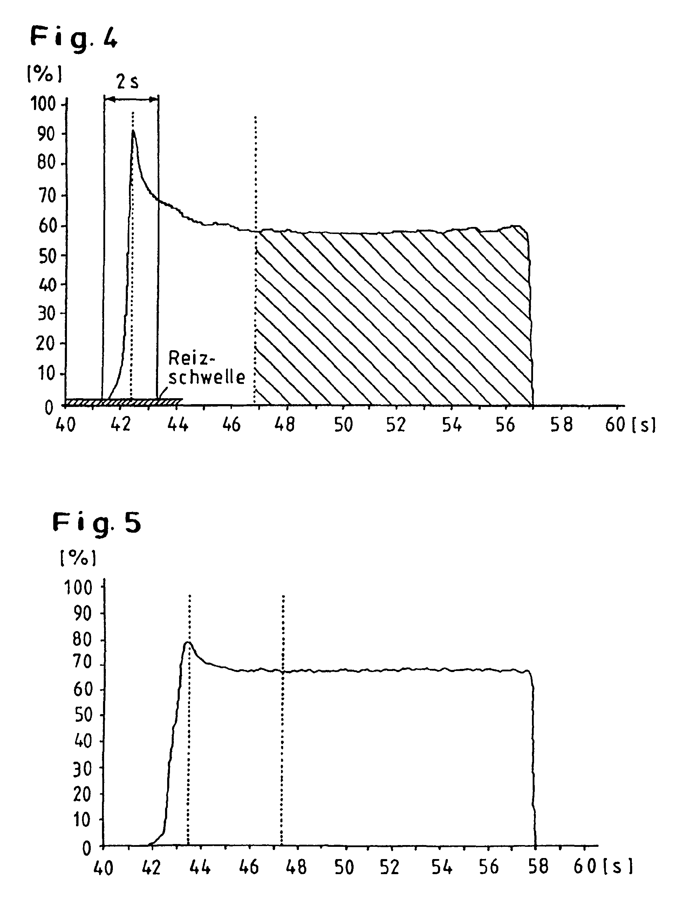

Die Fig. 4 zeigt einen charakteristischen Drehmomentverlauf der von dem Drehmomentaufnehmer 102 bei Durchführung einer Messung an dem Prüfkörper 120 (vergleiche Fig. 3) ermittelt wird. Die Meßkurve der Fig. 4 zeigt den Verlauf des von dem Drehmomentaufnehmer 102 gemessenen Drehmoments in Prozent des maximalen Drehmoments über der Zeitachse. Nach Erreichung der sogenannten Reizschwelle steigt die Drehmomentkurve zunächst steil an, da sich der Formstempel 101 und der Prüfkörper 120 zunächst noch in dem Bereich der Haftreibung befinden. Die Drehmomentkurve erreicht ein ausgeprägtes Maximum - in dem gezeigten Beispiel bei ca. 90 %- ca. eine Sekunde nach Überschreitung der Reizschwelle. Das so ermittelte maximale Drehmoment sowie die über den Pneumatikzylinder 104 auf den Formstempel 101 aufgebrachte Normalkraft und der mittlere Radius r des Prüfkörpers 120 gehen in die Berechnung des Haftreibungskoeffizienten ein.

Nach Erreichung des maximalen Drehmoments fällt die Drehmomentkurve ab und erreicht dann den schraffiert gezeigten Bereich der Gleitreibung. Im Bereich der Gleitreibung liegt das übertragende Drehmoment bei ca. 60 %. Entsprechend der Gleitreibungskoeffizient aus dem im Falle der Gleitreibung übertragenen Drehmoment sowie der Normalkraft und dem mittleren Radius r des Prüfkörpers 120 bestimmt. Nach Durchführung der Messung wird das Spritzgießwerkzeug geöffnet, d.h. der Formstempel 101 wird zurückgefahren und der Prüfkörper 120 wird aus dem Formnest 109 ausgestoßen - wie in Fig. 3 gezeigt. Danach wird das Kunststoffspritzgießwerkzeug wieder geschlossen um einen weiteren Prüfkörper 120 zur Durchführung einer weiteren Messung herzustellen. Vorteilhafterweise erfolgt die selbe Messung unter den selben Randbedingungen und mit dem Kunststoffmaterial etwa vier- bis fünfmal hintereinander. Die jeweils bestimmten Haft- und Gleitreibungskoeffizienten werden dann gemittelt, um die Genauigkeit des Meßergebnisses noch weiter zu erhöhen. Dies kann automatisch durch ein entsprechendes Auswertungsprogramm des Dataloggers erfolgen.

Die Fig. 5 zeigt ein Meßbeispiel entsprechend dem Diagramm der Fig. 4 welches für einen Prüfkörper aus Polycarbonat (Makrolon 2800) unter den folgenden Bedingungen in einer Vorrichtung gemäß der Fig. 3 gespritzt worden ist:

- Massetemperatur: 300°

- Werkzeugtemperatur: 90°

- Einspritzgeschwindigkeit: 40 mm/sec

- Nachdruck: 600 bar

Bei dem gespritzten Prüfkörper handelt es sich um eine 3 mm dicke, zentral angespritzte Rundplatte mit gezacktem Rand mit einem Durchmesser von 95 mm.

Der Zeitpunkt der Beendigung der Nachdruckphase wird durch Messung des Forminnendrucks mittels eines Druckfühlers in dem Spitzgießwerkzeug bestimmt. Nach der Beendigung der Nachdruckphase wurde der Formstempel 101 mittels des Pneumatikzylinders 104 (vergleiche Fig. 3) mit einer Normalkraft von 3.200 Newton gegen den Prüfkörper 120 gedrückt. Die Normalkraft wurde dabei mit Hilfe des Normalkraftaufnehmers mit einem Meßbereich von 0 bis 10 Kilo-Newton eingestellt.

Nach Beendigung der Palstifizierphase wurde die Düse der Plastifiziereinheit 114 vom Werkzeug abgefahren. Anschließend wurde das Spritzgießwerkzeug um 5 mm geöffnet, wobei der Anguss 121 durch den aus seinem Sitz gedrückten Mitnehmer 110 abgerissen wurde. Danach wurde der Mitnehmer und der sich in diesem befindliche Prüfkörper 120 mit Hilfe der Antriebseinheit des Elektromotors 119 mit einer Geschwindigkeit von 0,5 mm/sec (bezogen auf den mittleren Radius des Prüfkörpers) um einen Winkel von 37° gedreht. Die dabei auf den Formstempel 101 übertragenen Drehmomente wurden von dem in die Meßvorrichtung integrierten Drehmomentaufnehmer 102 (Meßbereich 0 bis 200 Newtonmeter) mit Hilfe von Dehnungsmeßstreifen nach dem Prinzip der Widerstandsmessung gemessen und registriert.

Die so erhaltenen Daten wurden auf den Datalogger übertragen, der den zeitlichen Verlauf der Drehmomente der Fig. 5 aufzeichnete. Aus dem Maximum der Drehmomentkurve ergibt sich ein Haftreibungskoeffizient von 0,515 und aus den zeitlich konstanten Endwerten des Drehmoments im Gleitreibungsbereich ein Gleitreibungskoeffizient von 0,439.

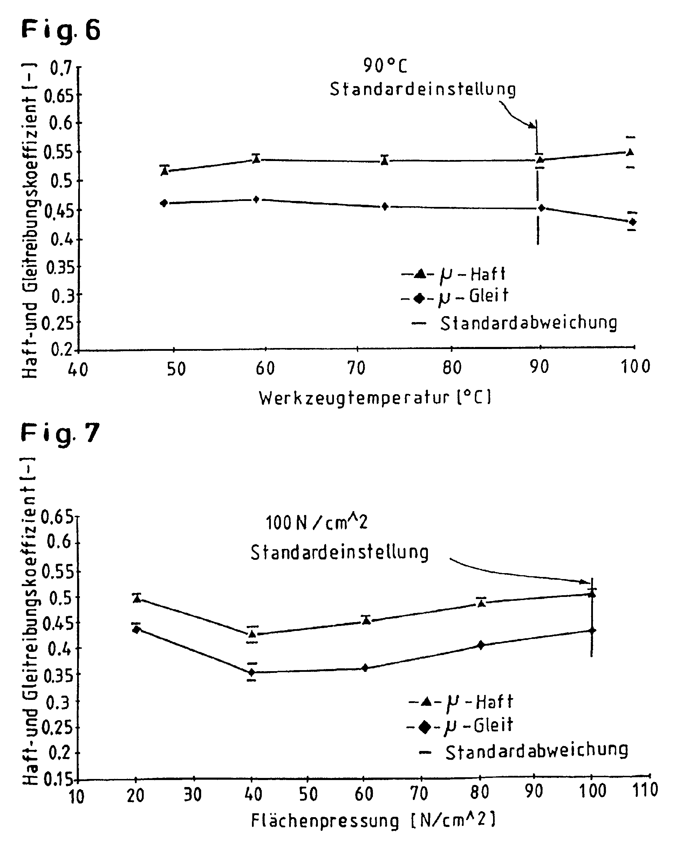

Die Fig. 6 zeigt die mit Hilfe der Meßanordnung Fig. 3 ermittelbaren Haft- und Gleitreibungskoeffizienten in Abhängigkeit von der Werkzeugtemperatur des Kunststoffspritzgießwerkzeuges. Die obere Kurve der Fig. 6 gibt dabei die gemessenen Haftreibungskoeffizieten und die untere Kurve die gemessenen Gleitreibungskoeffizienten an. Die Werkzeugtemperatur wurde in einem weiten Bereich zwischen 50° und 100° variiert. Aus dem Kurvenverlauf der Fig. 6 geht hervor, dass sowohl die Haft- als auch die Gleitreibungskoeffizienten weitgehend unabhängig von der Werkzeugtemperatur in der Vorrichtung der Fig. 3 bestimmbar sind.

Die Fig. 7 zeigt die Ergebnisse von mit der Vorrichtung der Fig. 3 durchgeführten Messungen bei unterschiedlichen Flächenpressungen. Der obere Kurvenverlauf der Fig. 7 gibt wiederum die ermittelten Haftreibungskoeffizienten, der untere Kurvenverlauf die Gleitreibungskoeffizienten an. Dazu wurden unterschiedliche Normalkräfte über dem Penumatikzylinder 104 auf den Prüfkörper 120 aufgebracht, so dass sich die unterschiedlichen Flächenpressungen ergeben.

Aus den Kurvenverläufen der Fig. 7 geht hervor, dass die Ermittlung der Reibungskoeffizienten in der Vorrichtung der Fig. 3 nur in geringem Maße durch die Höhe der Flächenpressung beeinflußt wird.

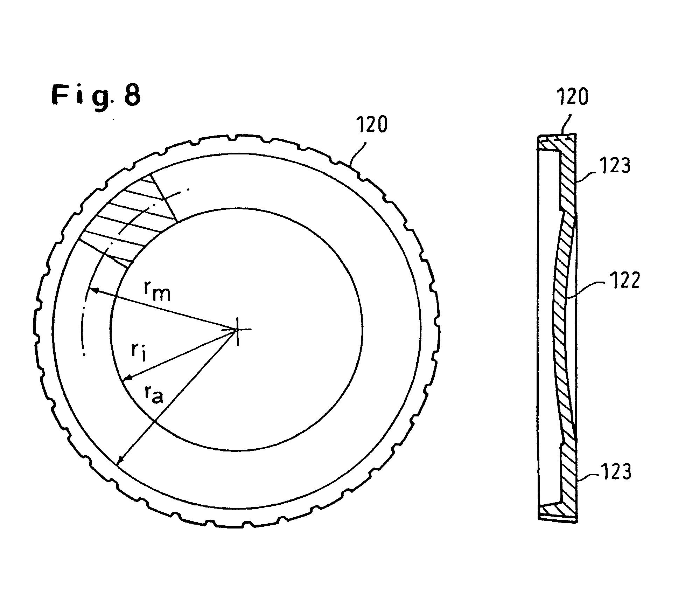

Die Fig. 8 zeigt eine vergrößerte Ansicht des Prüfkörpers 120 in Draufsicht und in einem seitlichen Schnitt. Der Prüfkörper 120 hat an seinem äußeren Umfang eine gezackte Oberfläche, um einen sicheren Formfluß mit dem Mitnehmer 110 zur Übertragung des Drehmoments zu gewährleisten. In seinem mittleren Bereich hat der Prüfkörper 120 eine Wölbung 122. Die Wölbung 122 dient zur Erhöhung der Elastizität des Prüfkörpers, um Verformungen bei einem Schrumpfungsprozess bei der Abkühlung des Prüfkörpers zu unterbinden. Dadurch ist gewährleistet, dass der Prüfkörper 120 in dessen planaren Bereichen 123 flächig an der Oberfläche des Formstempels 101 anliegt. Der Bereich 123 hat einen inneren Radius r Index i und einen äußeren Radius r Index a, woraus sich ein mittlerer Radius r Index m ergibt, der für die Berechnung der Reibungskoeffizienten verwendet wird. Beispielsweise kann der Prüfkörper 120 einen Durchmesser von 95 mm, einen inneren Radius ri von 28 mm und einen Außenradius ra von 42 mm aufweisen.

Die Erfindung erlaubt also eine exakte und allgemeingültige Bestimmung der Haft- und Gleitreibungskoeffizienten zur präzisen Ermittlung der erforderlichen "Losbrechkraft" eines Formteils aus dem Spritzgießwerkzeug. Dies stellt einen ganz wesentlichen Fortschritt gegenüber dem aus dem Stand der Technik bekannten Entformungshülsenverfahren dar, welches keine allgemeingültigen, sondern nur für die jeweiligen Werkzeugtemperaturen, Kühlzeiten und Nachdrücke charakteristischen Entformungskräfte liefert.

Das Hybridmodell der Fig. 2 hat ferner ein neuronales Netz NN7 zur Prognose von Hauptkomponenten der charakteristischen Punkte einer Spannungs- Dehnungskurve. Die Prognosewerte werden in ein rigoroses Modell 13 zur Rücktransformation der Hauptkomponenten eingegeben. Die rücktransformierten Hauptkomponenten werden dann in einen Spannungs-Dehnungs-Kurvengenerator 14 zur Ermittlung einer Spannungs-Dehnungskurve aus den rücktransformierten Hauptkomponenten eingegeben. Der Spannungs-Dehnungs-Kurvengenerator 14 ermittelt aus den eingegebenen Werten eine Spannungs-Dehnungs-Kurve durch entsprechende Berechnungsverfahren.

Im Folgenden wird das Verfahren zur Herstellung des neuronalen Netzes NN7 sowie die Funktionsweise des Spannungs-Dehnungs-Kurven-Generators 14 näher erläutert:

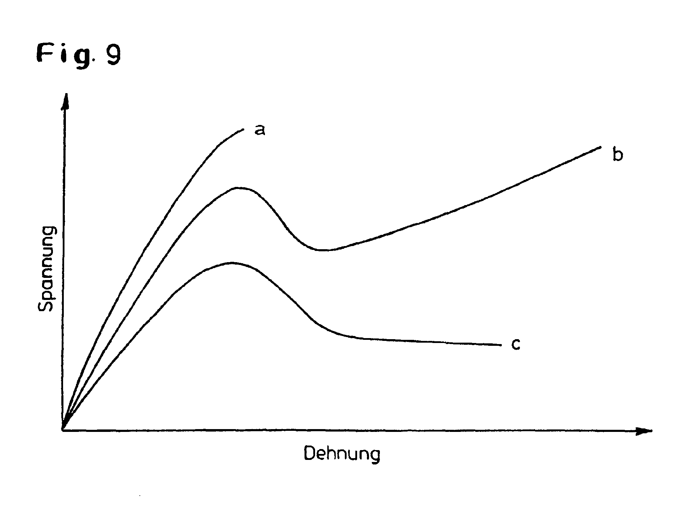

Die Fig. 9 zeigt exemplarisch verschiedene typisierte Spannungs-Dehnungs-Kurvenverläufe. Die Kurve a tritt bei zähen oder spröden Materialien ohne Streckpunkt auf, wobei sie bei zähen Materialien relativ flach verläuft, während sie bei spröden Materialien steil ansteigt. Die Kurve b tritt bei zähen Materialen mit Streckpunkt auf. Zugfestigkeit und Bruchspannung sind dabei größer als die Streckspannung. Die Kurve c tritt ebenfalls bei zähen Materialien mit Streckpunkt auf. Die Zugfestigkeit liegt im Streckpunkt und ist größer als die Bruchspannung.

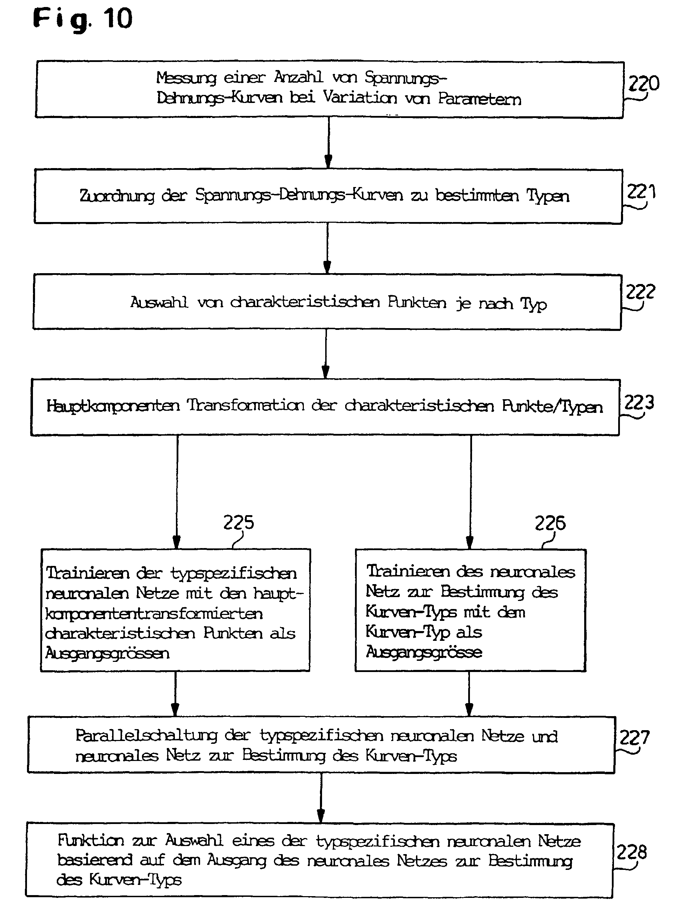

Die Fig. 10 zeigt ein Flussdiagramm zur Erzeugung neuronaler Netze für die Ermittlung von Spannungs-Dehnungs-Kurven. In Schritt 220 erfolgt zunächst die Durchführung von Zugversuchen zur Ermittlung von Spannungs-Dehnungs-Kurven bei Variationen verschiedener Parameter. Beispielsweise kann die Rezeptur, dass heißt die Materialzusammensetzung variiert werden, wie auch die Farbe und die Bauteilgeometrie.

Ferner können die Verarbeitungsbedingungen bei der Herstellung des Prüfkörpers variiert werden. Bei einem Kunststoffspritzgießteil sind dies etwa die Massetemperatur, die Werkzeugtemperatur und der Nachdruck. Ferner können auch die Bedingungen unter denen der Zugversuch durchgeführt wird, variiert werden, wie etwa die Temperatur, welcher der Prüfkörper bei der Durchführung des Zugversuches ausgesetzt ist.

Die in einer solchen Messreihe ermittelten Spannungs-Dehnungs-Kurven werden in dem Schritt 221 jeweils einem bestimmten Typ zugeordnet. Dabei kann beispielsweise die Typisierung gemäß der Fig. 9 zur Anwendung kommen.

In dem Schritt 222 wird für die typisierten Spannungs-Dehnungs-Kurven jeweils eine Anzahl von charakteristischen Punkten ausgewählt. Die Anzahl und die Lage der charakteristischen Punkte kann je nach Typ unterschiedlich sein. Beispielsweise kann bei einer Spannungs-Dehnungs-Kurve des Kurventyps a (vgl. Fig. 9) ein einzelner oder wenige charakteristische Punkte ausreichend sein, da die Kurve im Wesentlichen im linearen Bereich verläuft.

Bei einer Spannungs-Dehnungs-Kurve des Typs b werden zumindest drei charakteristische Punkte zur Erfassung des Kurvenverlaufs notwendig sein, nämlich der Streckpunkt, der Reißpunkt und das zwischen dem Streckpunkt dem Reißpunkt liegende Minimum der Spannungs-Dehnungs-Kurve. Entsprechende charakteristische Punkte können auch für eine Kurve des Typs c und für weitere Kurventypen definiert werden.

In dem Schritt 223 werden die charakteristischen Punkte der Spannungs-Dehnungs-Kurven einer Hauptkomponententransformation unterzogen. Durch die Hauptkomponententransformation wird sowohl das Rauschen als auch Redundanz verringert, indem eine Projektion auf einen relevanten Unterraum in einem mehrdimensionalem Koordinatenraum vorgenommen wird. Die Hauptkomponententransformation ist ein als solches bekanntes mathematisches Verfahren.

Eine entsprechende Hauptkomponententransformation kann auch hinsichtlich des Kurventyps durchgeführt werden.

Vor der Durchführung der jeweiligen Hauptkomponententransformation muss zunächst die Transformationsvorschrift ermittelt werden. Dies erfolgt durch Anordnung der zuvor ermittelten charakteristischen Punkte von Kurven desselben Kurventyps in einer Matrix und Bestimmung der Parameter der Hauptkomponententransformation, um die Matrix auf ihre Hauptkomponentenform zu bringen. Entsprechend kann auch hinsichtlich der Transformationsvorschrift für die Hauptkomponententransformation hinsichtlich des Kurventyps vorgegangen werden.

In dem Schritt 225 werden die in dem Schritt 220 variierten Parameter in verschiedene parallelgeschaltete neuronale Netze eingegeben. Jedes der parallel geschalteten neuronalen Netze ist dabei einem bestimmten Kurventyp zugeordnet.

Erfolgt die Eingabe der Parameter für einen Zugversuch bei dem eine Spannungs-Dehnungs-Kurve eines bestimmten Typs ermittelt wurde, so wird der Ausgang des diesem Kurventyp entsprechenden neuronalen Netzes ausgewertet. Die von dem neuronalen Netz des betreffenden Typs ausgegebenen Werte werden mit den hauptkomponententransformierten charakteristischen Punkten, die in dem Schritt 223 für den betrachteten Zugversuch ermittelt worden sind, verglichen. Aufgrund einer Differenz zwischen den von dem neuronalen Netz ausgegebenen Werten und den tatsächlichen durch die Hauptkomponententransformation in dem Schritt 223 ermittelten Werten erfolgt eine Rückkopplung in das neuronale Netz, um die Gewichtung der Neuronen entsprechend der Wertdifferenz anzupassen.

Durch die sequentielle Eingabe der verschiedenen Parameter und durch den jeweils stattfindenden Abgleich der berechneten mit den durch Messung und Hauptkomponententransformation erhaltenen Werte erfolgt dann schrittweise das Training der neuronalen Netze der verschiedenen Typen.

Ferner wird in dem Schritt 226 auch ein neuronales Netz zur Bestimmung des Kurventyps aus den Parametern trainiert. Hierzu werden die entsprechenden Parameter in ein neuronales Netz eingegeben, dessen Ausgang die Wahrscheinlichkeiten für das Vorliegen eines bestimmten Kurventyps anzeigen soll. Der Ausgang dieses neuronalen Netzes wird jeweils mittels des tatsächlich vorliegenden Kurventyps bzw. mit der Hauptkomponententransformation des tatsächlich vorliegenden Kurventyps abgeglichen und die Gewichtung der Neuronen entsprechend angepasst. Auch dieses neuronale Netz zur Bestimmung des Kurventyps wird durch das Anlegen der verschiedenen Parameter und dem nachfolgenden Abgleich mit dem tatsächlichen Kurventyp schrittweise trainiert.

Das Trainieren der typspezifischen neuronalen Netze mit den Hauptkomponententransformierten charakteristischen Punkten als Ausgangsgrößen erfolgt für alle Spannungs-Dehnungs-Kurven der in dem Schritt 220 durchgeführten Messreihe. Die Schritte 225 und 226 können parallel ablaufen, da der Eingabevektor, also eine bestimmte Menge von Parametern pro Spannungs-Dehnungs-Kurve, für die verschiedenen neuronalen Netze jeweils gleich sein können.

In dem Schritt 227 werden die typspezifischen neuronalen Netze sowie das neuronale Netz zur Bestimmung des Kurventyps, die in den Schritten 225 bzw. 226 ermittelt worden sind, parallel geschaltet. In dem Schritt 228 wird eine Funktion zur Auswahl eines der typspezifischen neuronalen Netze generiert.

Die Funktion erhält den Ausgang des neuronalen Netzes zur Bestimmung des Kurventyps, dass heißt die jeweiligen Wahrscheinlichkeiten für das Vorliegen eines bestimmten Kurventyps. Die Funktion ermittelt das Maximum aus den verschiedenen Typwahrscheinlichkeiten und wählt das jenige neuronale Netz aus, welches dem wahrscheinlichsten Kurventyp entspricht. Dadurch kann beim Betrieb des so zusammengeschalteten neuronalen Gesamt-Netzes basierend auf den Eingabeparametern zunächst der Kurventyp bestimmt werden, um das entsprechende typspezifische neuronale Netz auszuwählen.

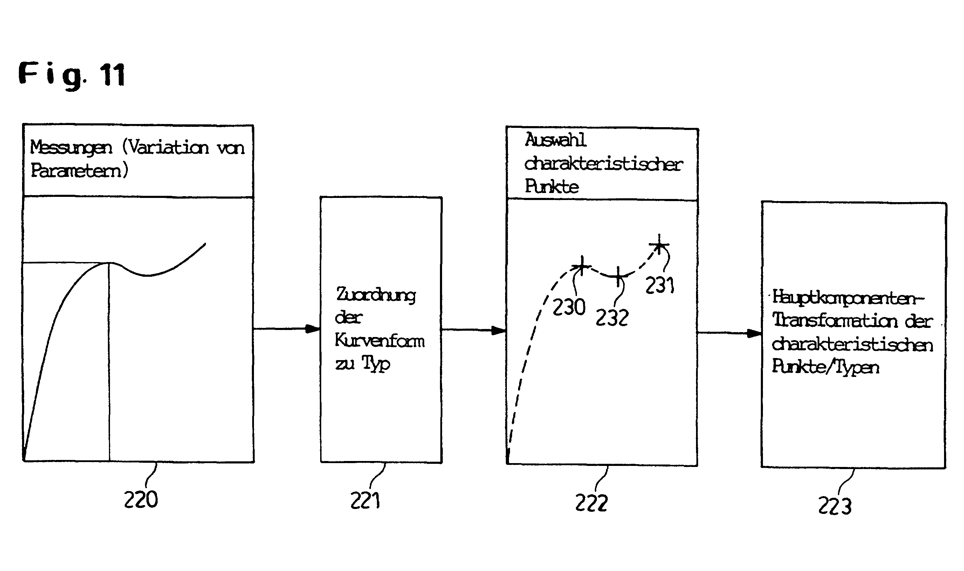

Die Fig. 11 veranschaulicht die Ermittlung der Hauptkomponenten-transformierten charakteristischen Punkte aus einer gemessenen Spannungs- Dehnungs-Kurve. Die Schritte der Fig. 11, die Schritten der Fig. 10 entsprechen, wurden dabei mit dem selben Bezugszeichen bezeichnet. In dem Schritt 220 wird zunächst eine Spannungs-Dehnungs-Kurve bei Vorliegen bestimmter Parameter, dass heißt, bei einer bestimmten Materialzusammensetzung, Farbe des Materials, Geometrie des Probekörpers, Verarbeitungsparameter beim Kunststoffspritzgießvorgang sowie einer bestimmten Temperatur, Prüfgeschwindigkeit und/oder weitere Parameter bei der Durchführung des Zugversuchs, gemessen. Solche Messungen werden wiederholt für verschiedene Variationen der Parameter, dass heißt für unterschiedliche Materialzusammensetzungen, Farben, Bauteilgeometrien usw. durchgeführt.

In dem Schritt 221 erfolgt eine Zuordnung der gemessenen Kurvenform zu einem bestimmten Typ. In dem Schritt 222 erfolgt sodann die Auswahl charakteristischer Punkte, je nach Kurventyp. In dem Beispiel der Fig. 11 handelt es sich bei der Spannungs-Dehnungs-Kurve um eine Kurve des Typs b (vgl. Fig.9), so dass entsprechend zumindest der Streckpunkt 230, der Reißpunkt 231 und der zwischen dem Streckpunkt 230 und dem Reißpunkt 231 liegenden Punkt 232 ausgewählt werden. Zwischen diesen Punkten können automatisch weitere Messpunkte beispielweise in äquidistanten Dehnungsabständen als charakteristische Punkte ausgewählt werden.

In dem Schritt 223 werden die so aus allen gemessenen Spannungs-Dehnungs-Kurven des gleichen Typs erhaltenen charakteristischen Punkte einer Hauptkomponententransformation unterzogen, um zunächst die Parameter für die Durchführung der Hauptkomponententransformation zu ermitteln. Die so ermittelte Berechnungsvorschrift wird dann zur Hauptkomponententransformation der charakteristischen Werte der einzelnen Kurven verwendet. Entsprechend können auch für das neuronale Netz zur Bestimmung der Typ-Wahrscheinlichkeit die Hauptkomponenten-transformierten Typen ermittelt werden.

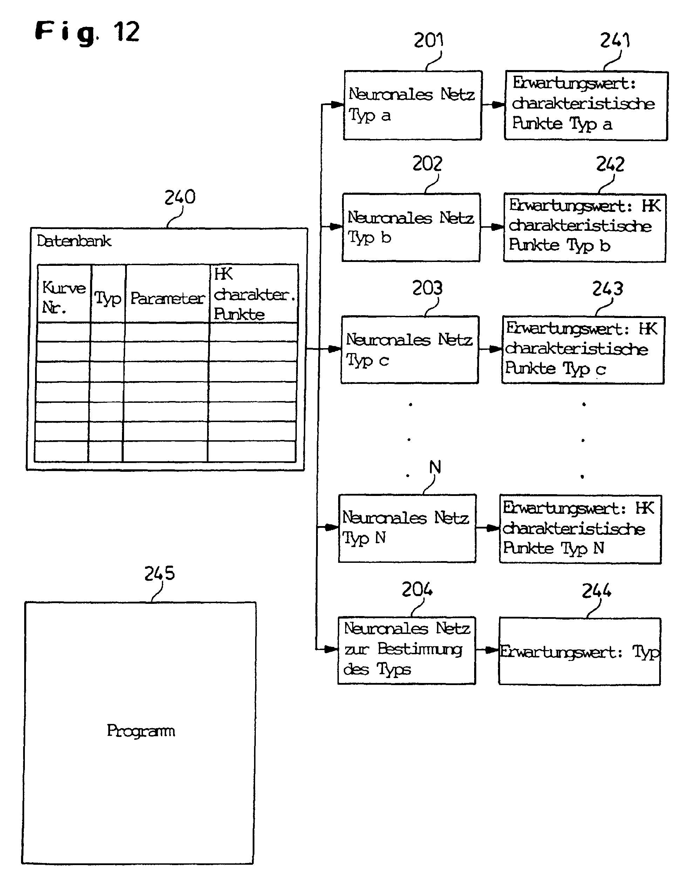

Fig. 12 zeigt ein Blockdiagramm eines Computersystems zum Training der neuronalen Netze. Das Computersystem hat eine Datenbank 240, die für jede gemessene Spannungs-Dehnungs-Kurve einen Datensatz beinhaltet. Der Datensatz für eine Spannungs-Dehnungs-Kurve beinhaltet den Typ der Kurve (beispielsweise Typ a, b oder c - vgl. Fig. 9) und/oder die entsprechenden Hauptkomponenten sowie die Hauptkomponenten (HK) der transformierten charakteristischen Punkte. Ferner beinhaltet der Datensatz für jede Kurve die variierten Parameter.

Von besonderem Vorteil ist, dass in der Datenbank nur die charakteristischen Punkte abzuspeichern sind und nicht sämtliche bei der Aufnahme einer Spannungs-Dehnungs-Kurve ermittelten Messwerte. Dadurch ist z.B. eine Datenreduktion von ca. 60.000 Messwerten auf unter 30 charakteristische Punkte möglich.

Die Datenbank ist mit den neuronalen Netzen 201 bis N verbunden. Ferner ist die Datenbank 240 mit dem neuronalen Netz 204 zur Bestimmung des Kurventyps verbunden. Jedes der neuronalen Netze 201 bis N bzw. 204 hat einen entsprechenden Ausgang 241 bis 243 bzw. 244.

Ferner weist das Computersystem ein Programm 245 zum Auslesen bestimmter Daten aus den in der Datenbank gespeicherten Datensätze und zum trainieren der neuronalen Netze 201 bis N bzw. 204 auf.

Zum trainieren der neuronalen Netze liest das Programm 245 zunächst die Parameter des Datensatzes der ersten Kurve der Datenbank 240 aus. Die ausgelesenen Parameter werden dann an die Eingänge der neuronalen Netze 201 bis N sowie des neuronalen Netzes 204 angelegt.

Ferner liest das Programm 245 den Kurventyp der aktuellen Kurve aus der Datenbank 240 aus. Entsprechend des Kurventyps wird dann der Ausgang des entsprechenden neuronalen Netzes gelesen. Ist die erste Kurve beispielsweise vom Typ c so, wird die Ausgabe 243 gelesen.

Die in der Ausgabe 243 gespeicherten Werte werden mit den tatsächlichen Hauptkomponenten der charakteristischen Punkte verglichen. Aus dem Unterschied der berechneten und der tatsächlichen Hauptkomponenten der charakteristischen Punkte wird die Gewichtung des neuronalen Netzes für den Kurventyp c entsprechend angepasst.

Gleichzeitig wird auch das neuronale Netz 204 trainiert, indem der Erwartungswert bzw. dessen HK aus der Ausgabe 244 ausgelesen wird. Die von dem neuronalem Netz 204 ermittelten Wahrscheinlichkeiten für das Vorliegen eines bestimmten Kurventyps werden mit dem tatsächlichen Kurventyp bzw. der entsprechenden HK, wie er in der Datenbank 240 für die betrachtete Kurve gespeichert ist - in dem betrachteten Beispiel der Kurventyp c - verglichen. Aus der Abweichung der ermittelten Wahrscheinlichkeiten mit dem tatsächlich vorliegenden Kurventyp wird das neuronale Netz hier entsprechend angepasst.

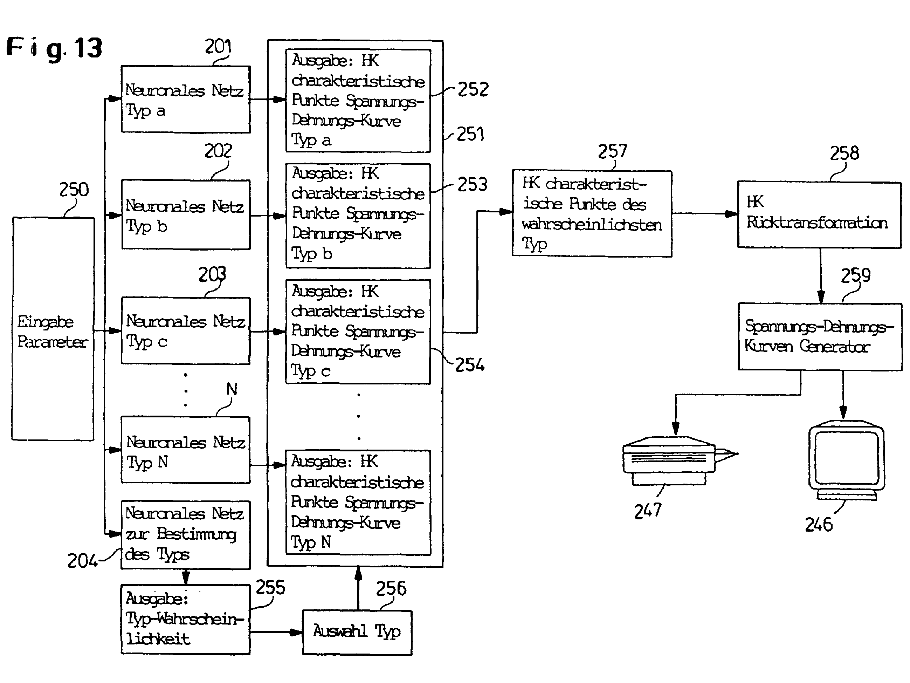

Die Fig. 13 zeigt das resultierende Hybridmodell zur Bestimmung einer Spannungs-Dehnungs-Kurve. Das System hat einen Eingang 250 zur Eingabe der Parameter. Der Eingang 250 ist mit den Eingängen der neuronalen Netze 201 bis N sowie mit dem Eingang des neuronalen Netzes 204 verbunden. Das System hat ferner einen Ausgang 251 mit den Speicher 252, 253, 254 .... jeweils für die neuronalen Netze 201 bis N. Die Speicher 252, 253, 254 .... sind jeweils mit einem Ausgang des entsprechenden neuronalen Netzes 201, 202, 203.... verbunden.

Das neuronale Netz 204 hat einen Ausgang 255 zur Ausgabe der Typwahrscheinlichkeiten bzw. von deren HK. In dem Programmmodul 256 erfolgt die Auswahl des Kurventyps basierend auf der Typwahrscheinlichkeit ggf. nach einer entsprechenden Rücktransformation. Das Programmmodul 256 wählt einen entsprechenden Speicher, der in dem Ausgang 251 beinhalteten Speicher 252, 253, 254....aus. Der Inhalt dieses Speichers wird von dem Programmmodul 257 aus dem entsprechenden Speicher ausgelesen und in dem Programmmodul 258 einer Rücktransformation der Hauptkomponenten unterzogen.

Aufgrund der rücktransformierten Hauptkomponenten wird sodann in dem Spannungs-Dehnungs-Kurven-Generator 259 eine Spannungs-Dehnungs-Kurve generiert. Die so generierte Spannungs-Dehnungs-Kurve kann beispielsweise auf einem Bildschirm 246 angezeigt oder auf einem Drucker 247 ausgedruckt werden.

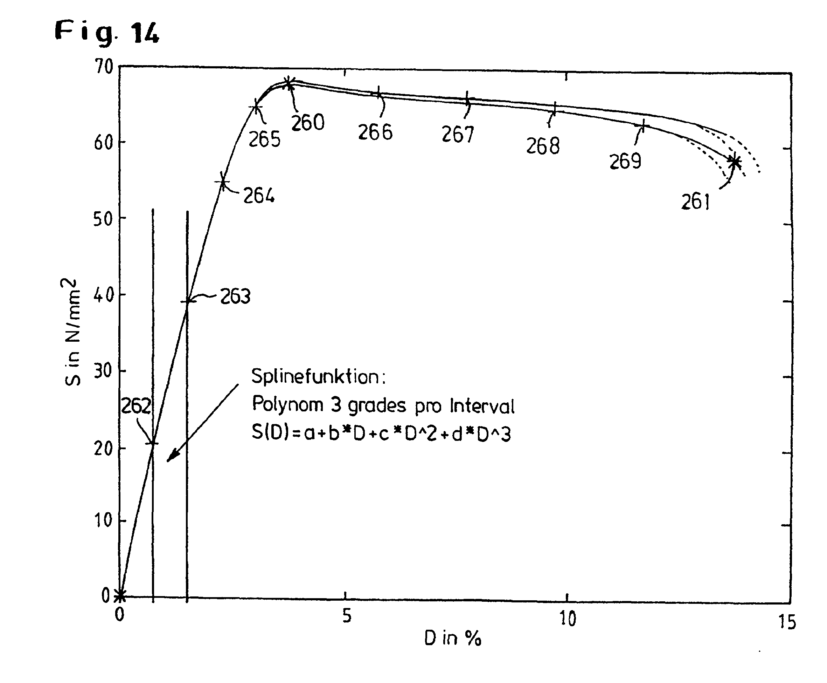

Die Fig. 14 zeigt die Auswahl von charakteristischen Punkten durch einen Benutzer. Bei dem Kurventyp der Fig. 14 erfolgt beispielsweise die Auswahl der charakteristischen Punkte 260 und 261 durch den Benutzer. Die Zwischenpunkte 262 bis 268 werden sodann automatisch äquidistant gesetzt und als weitere charakteristische Punkte automatisch ausgewählt.

Die so ausgewählten charakteristischen Punkte 260 bis 268 werden in den Generator 259 eingespeist und das Ergebnis der Spannungs-Dehnungs-Kurven-Berechnung durch den Generator 259 wird dem Benutzer zur Kontrolle in derselben Darstellung angezeigt. Der Benutzer hat die Möglichkeit sowohl die manuell gesetzten charakteristischen Punkte (beliebig) als auch die automatisch gesetzten Zwischenpunkte (nur vertikal) zu verschieben, um die durch den Generator 259 ermittelte Kurve zu optimieren. Bei der durch den Generator 259 berechneten Kurve wird dabei ein Splinepolynom dritten Grades pro Teilintervall verwendet, wobei zur Approximierung die jeweiligen charakteristischen Punkte verwendet werden.

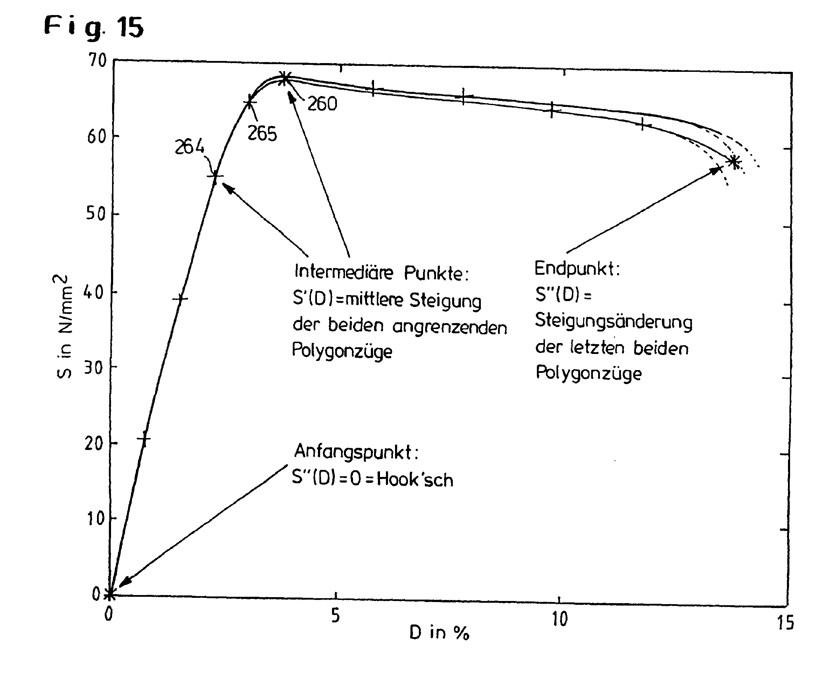

Die Fig. 15 zeigt weitere Randbedingungen für die Generierung einer Spannungs-Dehnungs-Kurve aus den ausgewählten charakteristischen Punkten. Der Anfang der durch den Generator 259 berechneten Spannungs-Dehnungs-Kurve liegt im Ursprung. Die zweite Ableitung der berechneten Kurve S ist in dem Ursprung gleich 0 - was den sogenannten Hook'schen Bereich entspricht.

Für alle intermediären Punkte 262 bis 269 (in Fig. 14), die auf der berechneten Kurve liegen, wird bei der Ermittlung der Splinepolynome die mittlere Steigung der angrenzenden Polygonzüge berücksichtigt. Für die Berechnung am Endpunkt 261 (in Fig. 14) der Spannungs-Dehnungs-Kurve wird hingegen die Steigungsänderung der letzten beiden Polygonzüge zugrunde gelegt.

Ferner ist es vorteilhaft die Spannungs-Dehnungs-Kurve als Kurve mit einer künstlichen "Zeit" zu parameterisieren, um ein Überschwingen zu verhindern. Des weiteren kann der Generator 259 eine Sortierfunktion beinhalten. Physikalisch kann die Dehnung des Probekörpers bei steigender Spannung nur größer werden. Bei einem dieser physikalischen Gegebenheit widersprechenden berechneten Kurvenverlauf kann der Kurvenverlauf durch eine Sortierung der Dehnungswerte korrigiert werden.

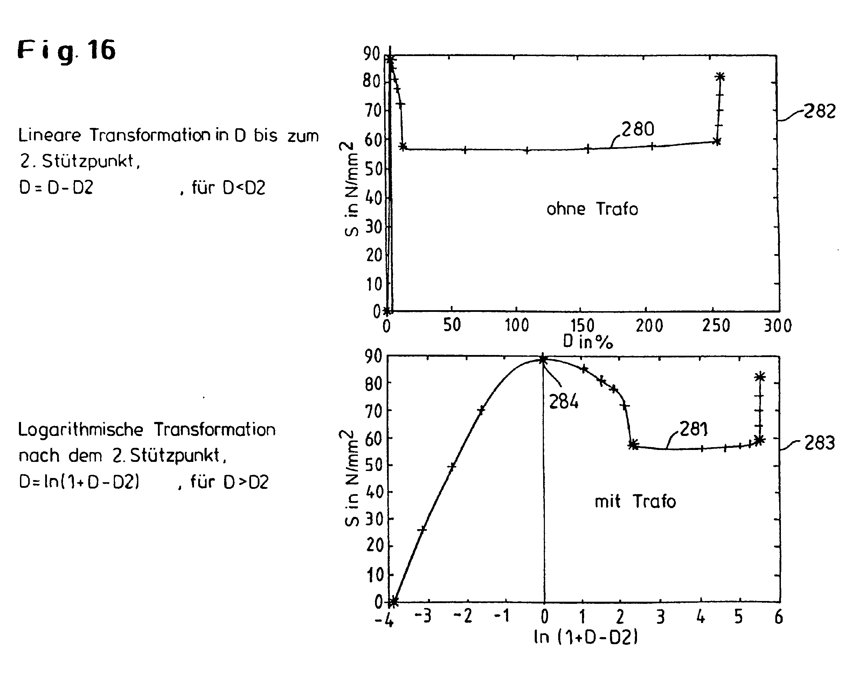

Die Fig. 16 zeigt die Spannungs-Dehnungs-Kurven 280 und 281. Die Spannungs-Dehnungs-Kurve 280 hat in ihrem Anfangsbereich einen sehr steilen Verlauf. Der lineare Anfangsbereich ist aber für die Praxis besonders relevant, es empfiehlt sich daher diesen durch eine geeignete Transformation aufzuweiten:

Die Spannungs-Dehnungs-Kurve 281 geht aus der Spannungs-Dehnungs-Kurve 280 hervor, indem der Kurvenbereich nach dem charakteristischen Punkt 284 eine logarithmische Skalierung der Dehnung D zur Anwendung kommt. Dadurch wird das Krümmungsverhalten der transformierten Kurve vergleichmäßigt und das Splineinterpolationsverfahren stabilisiert.

Zusätzlich werden die charakteristischen Punkte auch in einer Datenbank 17 in dem Hybridmodell der Fig. 2 für den direkten Zugriff gespeichert. Zunächst wird bei Eingabe von bestimmten Parameterwerten in den Eingang 1 geprüft, ob für diese Parameterwerte zuvor nicht bereits die charakteristischen Punkte ermittelt und in der Datenbank 17 abgelegt worden sind. Ist dies der Fall, so kann unmittelbar in dem nachgeschalteten Spannungs-Dehnungs-Kurven-Generator 14 die Spannungs-Dehnungs-Kurve berechnet werden.

Der Spannungs-Dehnungskurven-Generator 14 der Fig. 2 liefert optimale Ergebnisse nur für kurzzeitige Belastungen. Zur Simulation des Langzeitfalls dienen in einer Datenbank 15 gespeicherte Koeffizienten für ein rigoroses Modell 16; für den Langzeitfall wird also an Stelle des neuronalen Netzes NN7 und an Stelle des Spannungs-Dehnungs-Kurven-Generators 14 das rigorose Modell 16 benutzt. Die Ermittlung der Koeffizienten der Datenbank 15 und die Funktionsweise des rigorosen Modells 16 wird im Folgenden näher erläutert:

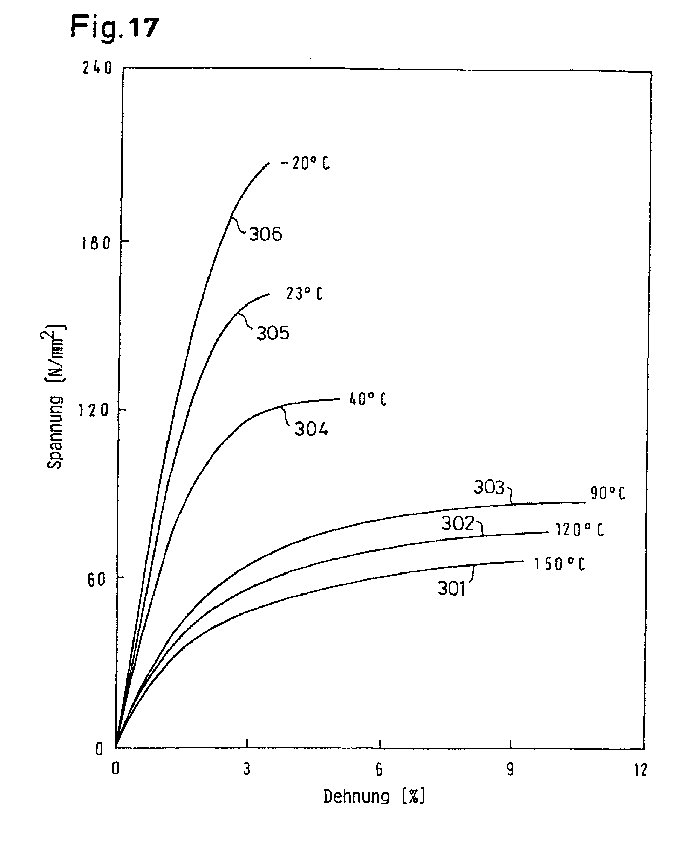

Die Fig. 17 zeigt eine Schar von Spannungs-Dehnungs-Kurven 301 bis 306. Die Kurven wurden jeweils für den Werkstoff Durethan-BKV 130 (Polyamid modifiziert mit Glasfaser und Kautschuk) mit einem Zugstab von 4 mm Dicke in einem Zugversuch bei 5 mm pro Minute Zuggeschwindigkeit im spritzfrischen Zustand gemessen.

Die Spannungs-Dehnungs-Kurve 301 wurde bei einer Temperatur von 150° Celsius gemessen; die weiteren Spannungs-Dehnungs-Kurven 302 bis 306 bei Temperaturen von 120° Celsius, 90° Celsius, 40° Celsius, 23 ° Celsius bzw. -20° Celsius. Dieselben Kurven ergibt auch eine Berechnung nach dem erfindungsgemäßen Verfahren.

Für die Beschreibung des Zusammenhangs zwischen der Spannung $\sigma$ und der Dehnung $\varepsilon$ in Abhängigkeit von der Temperatur T bei einer Kurzzeit-Zugbelastung - wie in Fig. 17 dargestellt - wird dabei der folgende Ansatz gewählt:

$$\sigma(T,\varepsilon) = A_1 + A_2 + A_3 + A_4 \qquad (1)$$

wobei

$$A_1 = c_1\varepsilon + c_2\varepsilon^3 + c_3\varepsilon^5 + c_4 \ln\left(\varepsilon + \sqrt{\varepsilon^2 + 1}\right) \qquad (2)$$

$$A_2 = c_5 \varepsilon T + c_6 \varepsilon T^3 + c_7 \varepsilon T^5 \tag{3}$$

$$A_3 = c_8 \varepsilon^3 T + c_9 \varepsilon^3 T^3 + c_{10} \varepsilon^3 T^5 \tag{4}$$

$$A_4 = c_{11} \varepsilon^5 T + c_{12} \varepsilon^5 T^3 + c_{13} \varepsilon^5 T^5 \tag{5}$$

Zur Bestimmung der Koeffizienten $c_1$ bis $c_{13}$ werden dabei zum Beispiel fünf bis zehn, vorzugsweise fünf bis sieben, Kurzzeitzugversuche bei verschiedenen Temperaturen für ein bestimmtes Material durchgeführt. Aufgrund der experimentell ermittelten Spannungs-Dehnungs-Kurven wird das sich daraus ergebende Gleichungssystem numerisch gelöst, so dass man die Werte der Koeffizienten $c_1$ bis $c_{13}$ erhält.

Die so parametrisierte Gleichung (1) beschreibt dann also den Zusammenhang zwischen der Spannung σ und der Dehnung ε für beliebige Temperaturen T für ein bestimmtes Material bei Kurzzeitzugbelastung.

Die entsprechenden berechneten Kurvenverläufe sind ebenfalls in der Fig. 17 dargestellt; in dem betrachteten Ausführungsbeispiel sind die berechneten und die gemessenen Kurven weitgehend deckungsgleich. Abweichungen der gemessenen von den berechneten Kurven können jedoch im Rahmen von mess- und werkstoffbedingten Streuungen vorkommen.

Das Kriechverhalten des Werkstoff im Zeitstandversuch wird durch eine Potenzfunktion nach Findley beschrieben:

$$\varepsilon(t) = \frac{\sigma}{E} + m\left(\frac{t}{t_0}\right)^n \tag{6}$$

wobei $t_0$ eine Einheitszeit ist und es sich bei m und n um die sogenannten Kriechparameter handelt. Die Gleichung (6) beinhaltet also sowohl den elastischen Dehnungsanteil als auch den viskoelastischen und viskosen Dehnungsanteil, der durch die Einheitszeit $t_0$ und die Kriechparameter m und n sowie den Elastizitätsmodul E festgelegt wird.

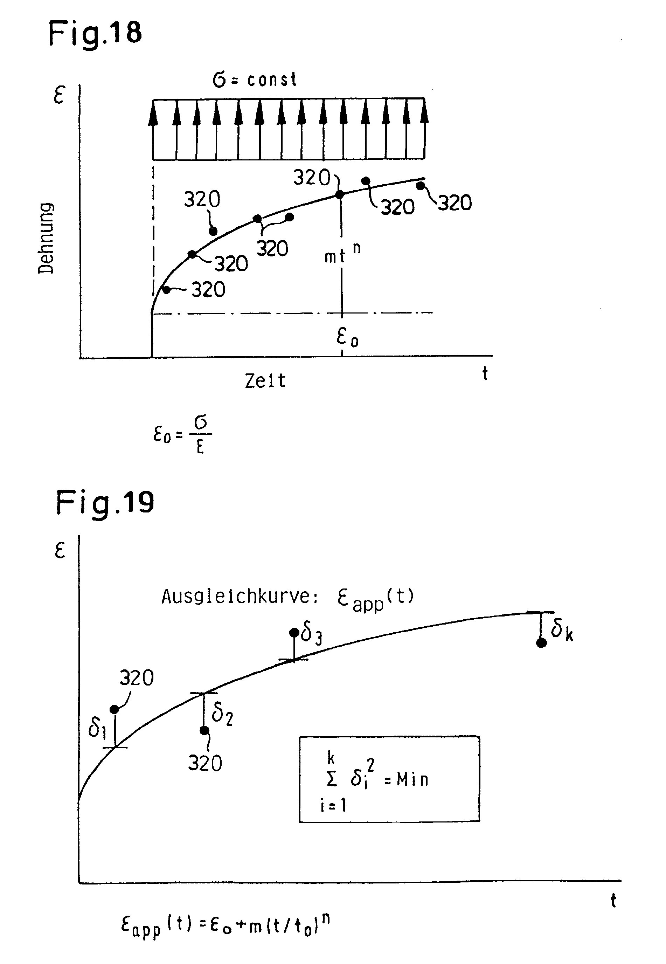

Die Fig. 18 zeigt schematisch das Prinzip eines Zeitstandversuches. Dabei wird ein Probekörper mit einer zeitlich konstanten Belastung beaufschlagt, indem beispielsweise ein definiertes Gewicht an den Probekörper gehängt wird. Zu unterschiedlichen Zeitpunkten werden dann Messpunkte 320 durch Ermittlung der zu dem betreffenden Zeitpunkt jeweils vorliegenden Dehnung ε ermittelt.

Die Fig. 19 veranschaulicht die Ermittlung der Kriechparameter m und n aus den ermittelten Messpunkten 320 nach der Methode der kleinsten Fehlerquadrate. Dabei gehen die Abweichungen $\delta_1$ bis δk der Messpunkte 320 von einer approximierten Dehnungskurve $\varepsilon_{app}$ (t) in die Ermittlung der Kriechparameter m und n ein.

Die so ermittelten Kriechparameter m und n beschreiben dann den zeitlichen Dehnungsverlauf für eine bestimmte Spannung σ und bei einer bestimmten Temperatur T. Die approximierte Dehnungskurve lässt sich auch für lange Belastungszeiträume extrapolieren.

Um zu einer allgemeineren Aussage der Gleichung (6) zu kommen, werden die Kriechparameter m und n jeweils in Abhängigkeit von der Spannung σ ausgedrückt:

$$\varepsilon(t,\sigma) = \frac{\sigma}{E} + m(\sigma)\left(\frac{t}{t_0}\right)^{n(\sigma)} \tag{7}$$

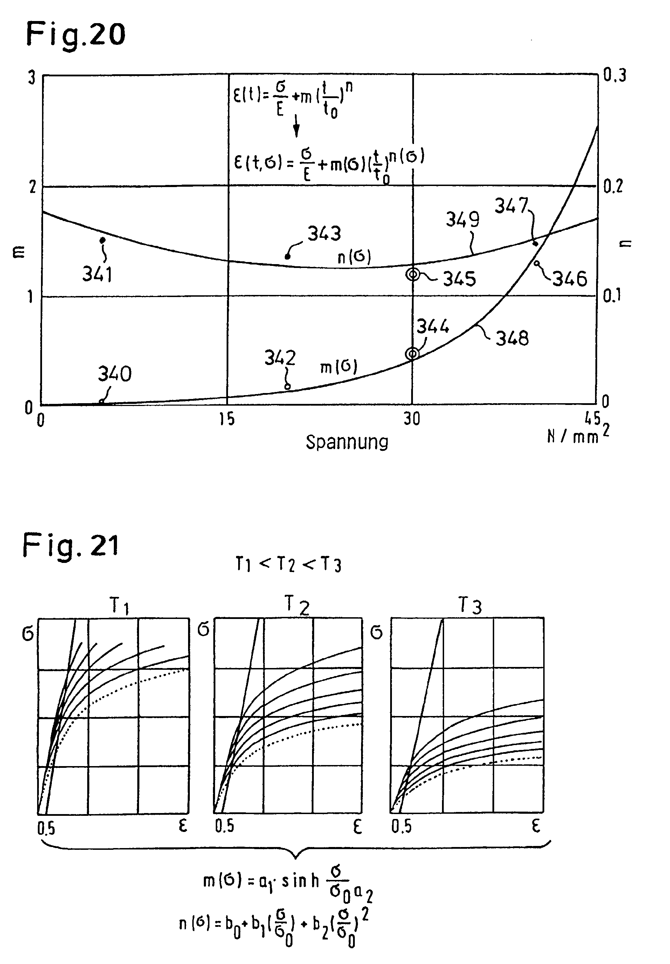

Es werden dann für jeweils dieselbe Temperatur Zeitstandversuche mit einer unterschiedlichen konstanten Spannung σ durchgeführt und die Kriechparameter n und m für die unterschiedlichen Spannungen σ ermittelt. Ein Ergebnis einer solchen Messreihe zeigt die Fig. 20. Die Messreihen wurden dabei bei gleichbleibender Temperatur T durchgeführt.

Die Kurve 348 gibt den spannungsabhängigen Verlauf des Kriechparameters m an; die Kurve 349 gibt den spannungsabhängigen Verlauf des Kriechparameters n an. Die Kurven 348 und 349 werden aus den aus einzelnen Zeitstandversuchen für verschiedene Spannungen ermittelten Wertepaaren für n und m ermittelt.

Beispielsweise wird ein Zeitstandversuch mit einer Spannung von ca. 5 Newton pro mm$^2$ durchgeführt, wobei sich für n der Parameterwert Punkt 341 und für m der Parameterwert Punkt 340 ergibt. Entsprechende Zeitstandversuche werden für Spannungen von ca. 20 Newton pro mm$^2$, 30 Newton pro mm$^2$ und 40 Newton pro mm$^2$ durchgeführt, so dass sich die weiteren Wertepaare Punkte 342, 343; 344, 345; 346, 347 für die Kriechparameter m und n jeweils bei den verschiedenen Spannungen ergeben, wie in Fig. 20 dargestellt.

Entsprechende Zeitstandversuche bei unterschiedlichen Spannungen σ werden beispielsweise für drei verschiedene Temperaturen $T_1$, $T_2$ und $T_3$ durchgeführt, wie in Fig. 21 dargestellt. Für jede der Temperaturen $T_1$, $T_2$ und $T_3$ werden dann den Kurven 347 und 348 der Fig. 20 entsprechende Kurvenverläufe der Kriechparameter n und m ermittelt.

Die Kurvenverläufe der Kriechparameter m und n werden im Weiteren durch die folgenden Ansätze approximiert:

$$m(\sigma) = a_1 \cdot \sinh \frac{\sigma}{\sigma_0 \cdot a_2} \qquad (8)$$

$$n(\sigma) = b_0 + b_1\left(\frac{\sigma}{\sigma_0}\right) + b_2\left(\frac{\sigma}{\sigma_0}\right)^2 \qquad (9)$$

wobei es sich bei $a_1$, $a_2$ bzw. $b_0$, $b_1$ und $b_2$ jeweils um von der Temperatur T abhängige Parameterwerte handelt.

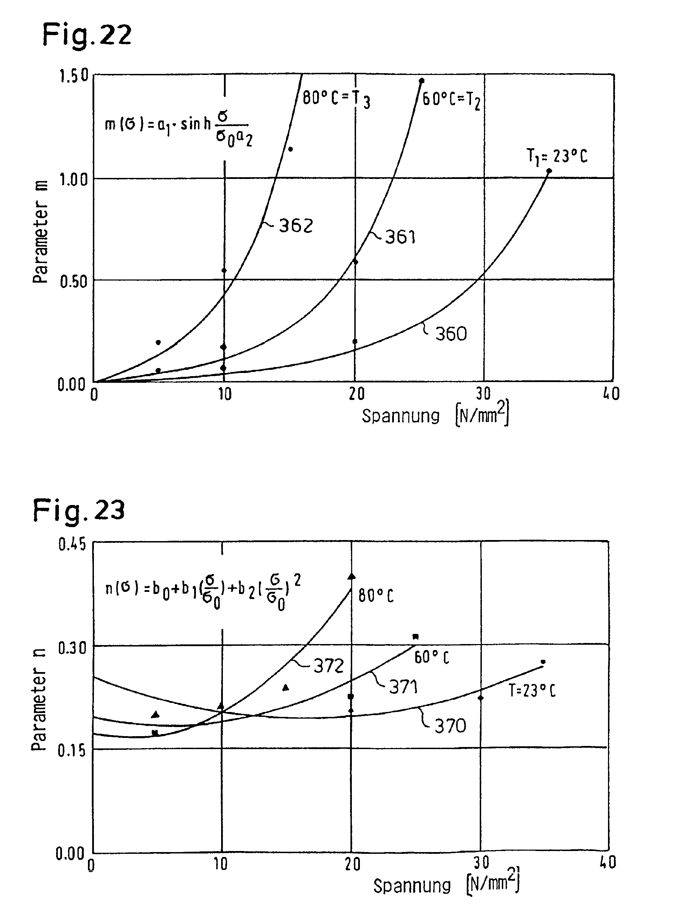

Die Fig. 22 zeigt drei unterschiedliche Verläufe des Kriechparameters m in Abhängigkeit von der Spannung für drei unterschiedliche Temperaturen $T_1$ = 23° Celsius, $T_2$ = 60° Celsius und $T_3$ = 80° Celsius woraus sich die Kurvenverläufe 360, 361 und 362 ergeben.

Die Fig. 23 zeigt die entsprechenden Kurven 370, 371 und 372 des Kriechparameters n jeweils für eine bestimmte Temperatur in Abhängigkeit von der Spannung.

Zur Ermittlung der Kurven 360, 361 und 362 bzw. 370, 371 und 372 werden jeweils die Werte der Koeffizienten $a_1$, $a_2$ bzw. $b_0$, $b_1$ und $b_2$ der Formeln (8) und (9) aufgrund der jeweils für die Kriechparameter m und n ermittelten Einzelwerte aus den Zeitstandversuchen ermittelt. Die entsprechenden Einzelwerte sind in den Figuren 22 und 23 mitdargestellt.

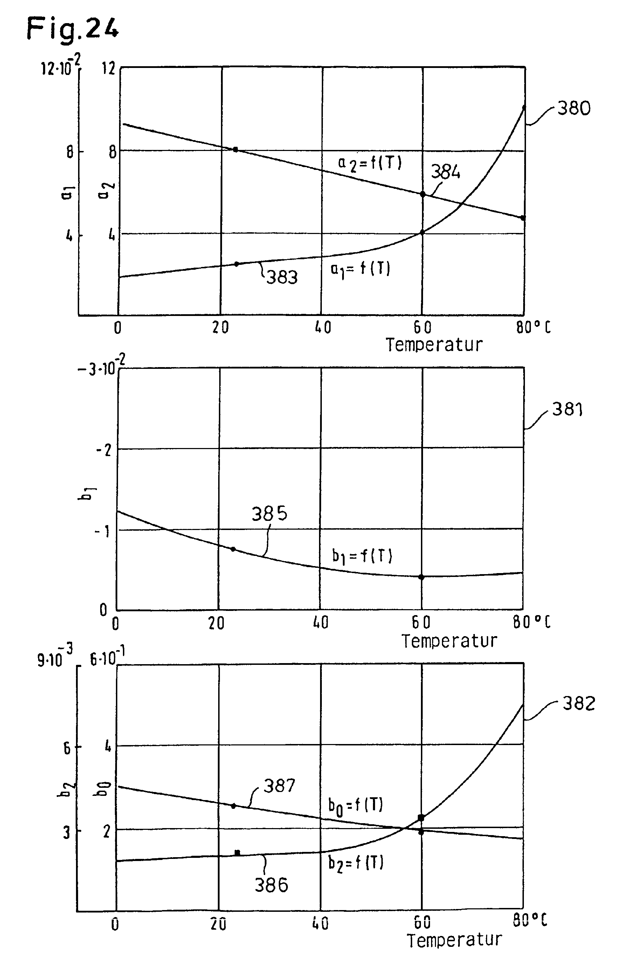

Die Fig. 24 zeigt die Diagramme 380, 381 und 382. Das Diagramm 380 veranschaulicht den Verlauf der Parameter $a_1$ und $a_2$ in Abhängigkeit von der Temperatur. Die entsprechenden Kurven 383 und 384 werden aufgrund der für die Temperaturen $T_1$, $T_2$ und $T_3$ die ermittelten Werte für $a_1$ und $a_2$ ermittelt, indem beispielsweise durch die ermittelten Punkte ein Polynom gelegt wird, beispielsweise ein Spline-Polynom.

Entsprechend zeigt das Diagramm 381 den Kurvenverlauf 385 für den Parameter $b_1$ in Abhängigkeit von der Temperaturen, wobei die Kurve 385 wiederum aufgrund der ermittelten Parameterwerte bei den Temperaturen $T_1$, $T_2$ und $T_3$ ermittelt wurde. Auch hier kann wiederum ein Polynom beispielsweise ein Spline-Polynom zur Beschreibung der Kurve 385 verwendet werden.

Das Diagramm 382 zeigt die entsprechenden Kurven 386 und 387 für die entsprechenden Verläufe der Koeffizienten $b_0$ und $b_2$.

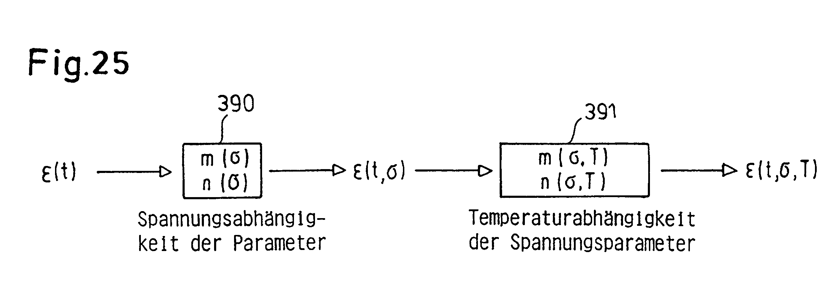

Die Fig. 25 veranschaulicht die schrittweise Erweiterung des nur zeitabhängigen Findley-Ansatzes nach Formel (6) auf einen von der Zeit t, der Spannung σ und der Temperatur T abhängigen Zusammenhang.

Dazu werden in dem Schritt 390 zunächst die Kriechparameter m und n jeweils in Abhängigkeit von der Spannung σ ausgedrückt, so dass man die Gleichung (7) erhält.

Im nächsten Schritt 391 werden dann die Kriechparameter m und n zusätzlich in Abhängigkeit von der Temperatur T durch Einführung der temperaturabhängigen Parameter $a_1$, $a_2$ bzw. $b_0$, $b_1$ und $b_2$ gemäß Formeln (8) und (9) ausgedrückt. Daraus ergibt sich dann schließlich der folgende Zusammenhang.

$$\varepsilon(t,\sigma,T) = \frac{\sigma}{E(T)} + m(\sigma,T)\left(\frac{t}{t_0}\right)^{n(\sigma,T)} \qquad\qquad (10)$$

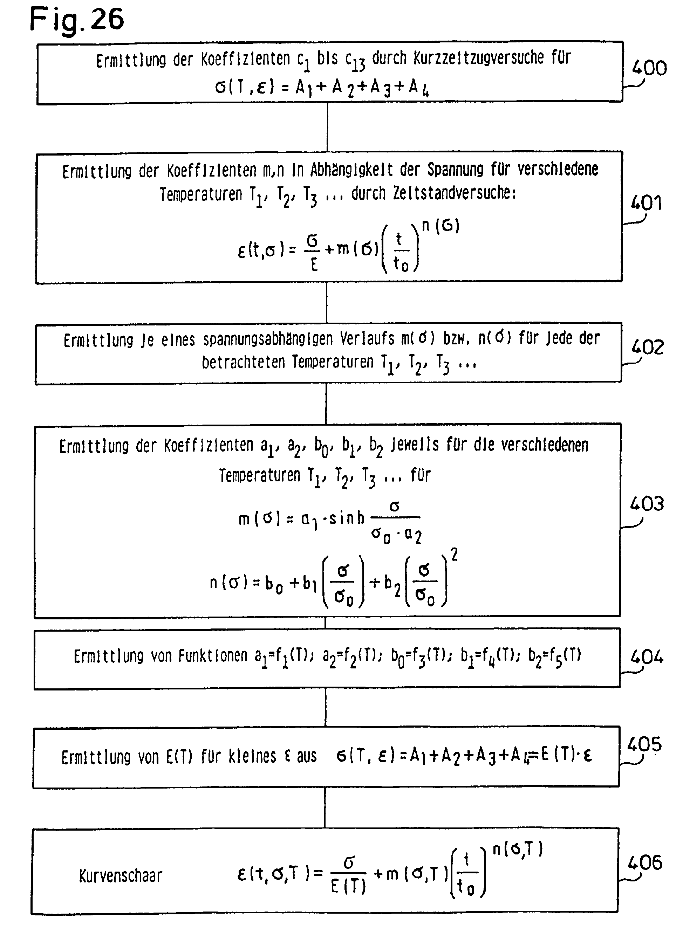

Die Fig. 26 zeigt ein Flussdiagramm eines erfindungsgemäßen Verfahrens zur Ermittlung eines Zusammenhangs zwischen der Dehnung ε und der Spannung σ in Abhängigkeit von der Zeit t und der Temperatur T. In Schritt 400 wird zunächst der Fall der Kurzzeitbelastung zum Beispiel mittels Kurzzeit-Zugversuchen untersucht. Dadurch werden die Koeffizienten $c_1$ bis $c_{13}$ des Ansatzes (1) ermittelt. Die resultierende Funktion beschreibt dann also den Zusammenhang zwischen der Spannung σ und der Dehnung ε in Abhängigkeit von der Temperatur T bei einer KurzzeitBelastung.

Im Schritt 401 wird sodann das Verhalten des zu untersuchenden Materials für den Fall der Langzeitbelastung untersucht. Dazu werden jeweils für bestimmte Temperaturen $T_1$, $T_2$ und $T_3$ mit jeweils unterschiedlichen konstanten Spannungen σ Zeitstandversuche durchgeführt und aus den ermittelten Spannungs-Dehnungs-Kurven jeweils ein Wertepaar für die Kriechparameter n und m ermittelt.

Daraus ergibt sich in dem Schritt 402 jeweils ein spannungsabhängiger Verlauf der Kriechparameter m und n in Abhängigkeit von der Spannung σ für jede der betrachteten Temperaturen, wie auch in den Figuren 22 und 23 anhand eines Beispiels dargestellt.

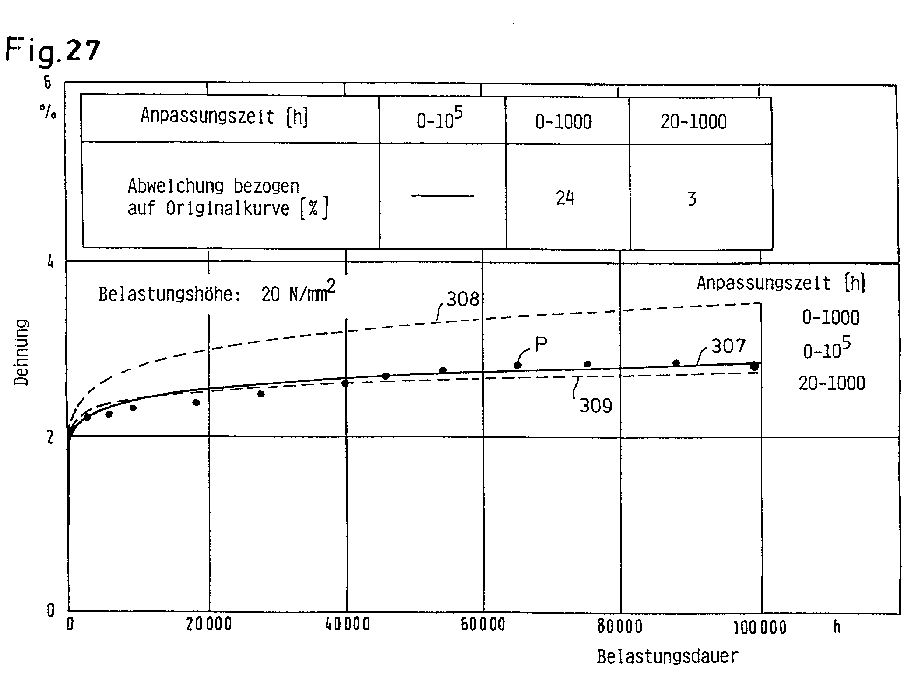

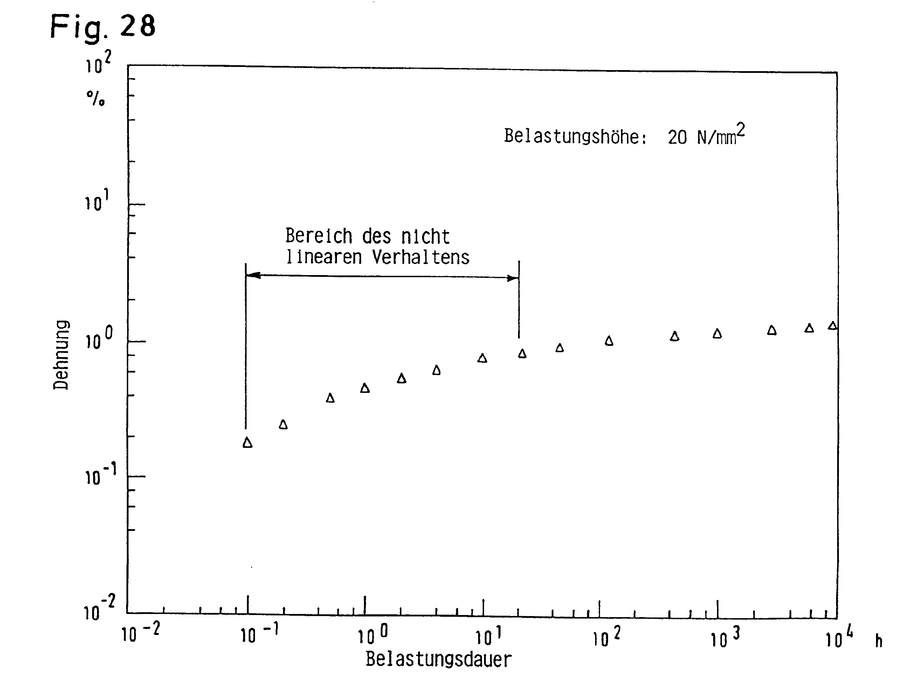

Für die Ermittlung der Kriechparameter hat sich herausgestellt, das die Erfindung beispielsweise bei einer Versuchsdauer von ca. sieben Wochen (ca. 1000 h) eine hinreichend genaue Approximierung erlaubt, die die Dehnung auch für Belastungsdauern von über einem Jahr und länger beschreibt. Dies wird mit Bezug auf die Fig. 27 und 28 noch näher erläutert.

In dem Schritt 403 werden die Parameter $a_1$, $a_2$ bzw. $b_0$, $b_1$ und $b_2$ der Ansätze (8) und (9) aus den experimentell ermittelten Wertepunkte der spannungabhängigen Verläufe von m bzw. n ermittelt. Daraus ergeben sich für jede der betrachteten Temperaturen entsprechende Werte für die Koeffizienten der Ansätze (8) und (9).

Die Werte dieser Koeffizienten sind jeweils temperaturabhängig. Zur Beschreibung des jeweiligen Temperaturzusammenhangs wird durch die jeweils ermittelten Wertepunkte eine Funktion f(T) beispielsweise mittels eines Polynom- oder Spline-Polynom-Ansatzes gelegt. Die entsprechenden Polynome $f_1$ bis $f_5$ werden in Schritt 404 ermittelt, entsprechend den Kurven 383 bis 386 der Fig. 24.

In Schritt 405 wird das Elastizitätsmodul E(T) aus der Formel (1) ermittelt, indem beispielsweise ein relativ kleiner Werte zwischen 0,05% und 0,25 % für die Dehnung ε angenommen wird, d.h. einer Dehnung im linearen hookschen Bereich.

In dem Schritt 406 werden dann die ermittelten Zusammenhänge in die Formel (10) eingesetzt, d.h. der im Schritt 405 ermittelte Zusammenhang E(T) sowie die Zusammenhänge für die Kriechparameter m und n, die sich aus den Ansätzen (8) und (9) und die ermittelten durch die Funktionen $f_1$ bis $f_2$ beschriebenen von der Temperatur T abhängigen Verläufe der entsprechenden Koeffizientenwerte ergeben. Die so ausgedrückte Formel (10) gibt also unmittelbar einen Zusammenhang zwischen der Dehnung ε und der Spannung σ für beliebige Zeiten t und beliebige Temperaturen T an.

Die Formel (10) kann mittels eines Computerprogramms in einem Datenverarbeitungssystem, beispielsweise einem Personal Computer, implementiert werden, so dass sich durch Eingabe beispielsweise einer interessierenden Zeit t und einer bestimmten Temperatur T sich unmittelbar eine Spannungs-Dehnungs-Kurve errechnen und anzeigen lässt. Durch Variation der Temperatur T erhält man dann beispielsweise rein rechnerisch die Darstellung der Fig. 17.

Die Fig. 27 zeigt die Dehnung über der Belastungsdauer. Die Kurve 307 wurde in einem Zeitstandversuch einer Belastungsdauer von insgesamt 100 000 Stunden (ca. 10 Jahre) ermittelt. Ferner zeigt die Fig. 27 die Messpunkte P die der Kurve 307 zugrunde liegen.

Die gestrichelte Kurve 308 der Fig. 27 ist ein aus der Formel (6) berechneter Kurvenverlauf, wobei zur Ermittlung der Kriechparameter m und n Messpunkte P für Belastungsdauern zwischen t=0 und t= 1000 Stunden berücksichtigt wurden. Die gestrichelte Kurve 309 entspricht der Kurve 308, jedoch wurden nur Messpunkte zwischen t = 20 Stunden und t = 1000 Stunden bei der Approximationsberechnung berücksichtigt. Durch die nicht Berücksichtigung der Messpunkte im Anfangsbereich zwischen t = 0 und t = 20 Stunden ist eine deutlich verbesserte Approximation der Kurve 309 an die tatsächlich gemessene Kurve 307 im Vergleich zu der Kurve 308 gegeben.

Generell ist eine generauere Extrapolation erreichbar, wenn die Messwerte in einem Anfangsbereich bis etwa t = 20 bis 100 Stunden nicht für die Bestimmung der Kriechparameter m und n berücksichtigt werden. Das liegt daran, dass in dem Anfangsbereich das Material ein nicht-lineares Verhalten zeigt. Dies verdeutlicht auch die Fig. 28:

Die Fig. 28 zeigt die Dehnung in % in Abhängigkeit von der Belastungsdauer für eine Belastung von $20 N/mm^2$. Aus dem Verlauf der Messwerte der Fig. 28 ergibt sich, dass das Materialverhalten in dem Anfangsbereich bis ca. 20 Stunden nichtlinear ist und danach in einen linearen Verlauf übergeht. Für die genaue Ermittlung des Anfangsbereichs ist also der Übergang zwischen nicht-linearen und linearen Verhalten zu ermitteln.

Das erfindungsgemäße Verfahren zur Bestimmung des Zusammenhangs zwischen der Spannung σ und der Dehnung ε erlaubt es die Kosten und die erforderliche Zeit zur Ermittlung der Materialeigenschaften von Kunststoffen drastisch zu reduzieren. Ferner erlaubt dieses Verfahren aufgrund der gewonnenen und durch die Formel (10) ausgedrückten Ergebnisse die Konstruktion von Kunststoff-Teilen mit größerer Genauigkeit durchzuführen, gerade auch was das Langzeitverhalten des Werkstoffs betrifft.

Ebenfalls erlaubt es das erfindungsgemäße Verfahren eine Aussage über die Belastungsgrenze des Materials zu treffen. Die Erfahrungen aus dem Langzeitverhalten und Beobachtungen von zahlreichen experimentellen Ergebnissen aus Zugkriechversuchen bei Raum- sowie bei höheren Temperaturen zeigen, dass sich die unverstärkten Thermoplaste an ihrer Bemessungsgrenze befinden, wenn zusätzlich zu der elastischen Dehnung 0,5% nicht-elastische Dehnung hinzukommt. Die Line von 0,5 % nicht-elastische Dehnung entspricht derjenigen Last, bei der eine überproportionale Dehnung innerhalb der Belastungsdauer zu verzeichnen ist.

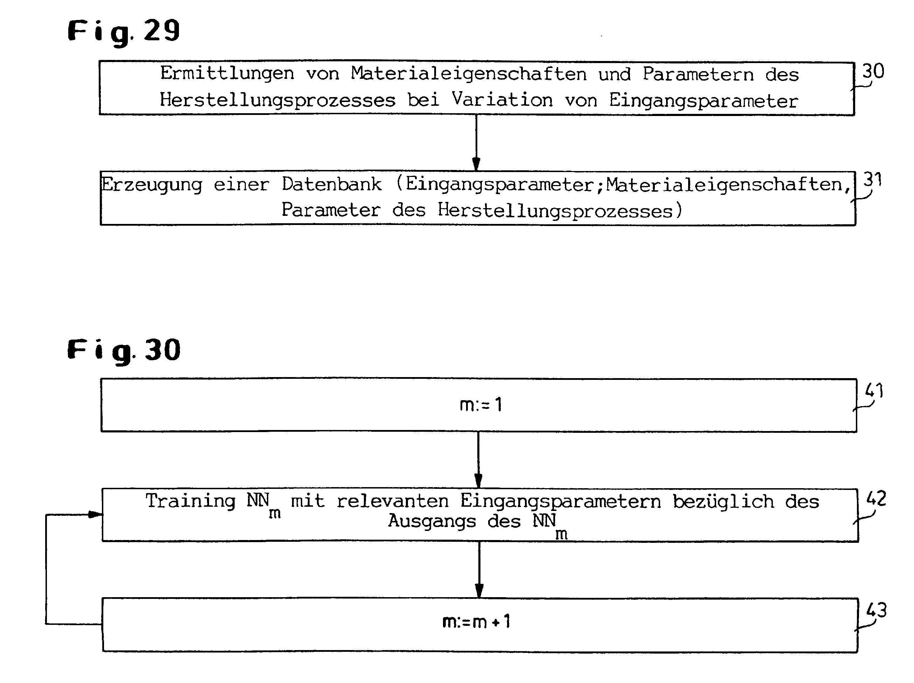

Die Fig. 29 zeigt den Ablauf für die Erzeugung einer Datenbank, zum Training der neuronalen Netze des Hybridmodells . Zunächst wird in dem Schritt 30 eine Serie von Versuchen durchgeführt, bei der unter Variation beispielsweise von Rezepturen und Spritzgießformen (Dicke) und Variationen von Prozess- und Maschinenparametem der Kunststoffspritzgießmaschine entsprechende Kunststoff- Formteile hergestellt werden, die danach einer Analyse unterzogen werden. In dem Schritt 31 wird aus den in dem Schritt 31 ermittelten Daten eine Datenbank erzeugt. Diese Datenbank beinhaltet pro Datensatz die Eingangsparameter, dass heißt, die jeweiligen Rezeptur- und Formparameter sowie die Prozess- und Maschinenparameter und die entsprechenden resultierenden Eigenschaften des hergestellten Kunststoffformteils, insbesondere dessen mechanischer Eigenschaften, sowie die Charakteristika des Herstellungsprozesses, also die Verarbeitungseigenschaften, thermischen Eigenschaften, rheologische Eigenschaften und die Prozesszeit.

Die Fig. 30 zeigt das Vorgehen zum Training der einzelnen neuronalen Netze des hybriden Modells. In dem Schritt 41 wird zunächst die Laufvariable m mit dem Wert 1 initialisiert.

In dem Schritt 42 wird das erste neuronale Netz NN1 trainiert. Dazu wird auf die Datenbank zugegriffen, um die zum Training des betreffenden neuronalen Netzes NN1 erforderlichen Eingangsparameter abzurufen. Der Ausgang des neuronalen Netzes NN1 - in dem Beispiel der Fig. 2 die Dichte - wird mit dem im Experiment ermittelten Wert verglichen. Bei einer Abweichung zwischen den prognostizierten und dem tatsächlichen Wert werden die Gewichtungen der Neuronen des neuronalen Netzes NN1 entsprechend angepasst, wie es an sich bekannt ist. Nachdem das Training des neuronalen Netzes NN1 in dem Schritt 42 abgeschlossen ist, wird die Laufvariable m in dem Schritt 43 inkrementiert und der Schritt 42 wird wiederholt so oft ausgeführt, bis alle neuronalen Netze $NN_m$ trainiert worden sind.

**Bezugszeichenliste**

| | |
|---|---|
| Eingang | 1 |
| neuronales Netz | 2 |
| Eingang | 3 |
| Abbildungsmodul | 4 |
| Trainingsmodul | 5 |
| Ausgang | 6 |
| rigoroses Modell | 7 |
| rigoroses Modell | 8 |
| rigoroses Modell | 9 |
| rigoroses Modell | 10 |
| Modul | 11 |
| Datenbank | 12 |
| rigoroses Modell | 13 |
| Spannungs- Dehnungskurvengenerator | 14 |
| Datenbank | 15 |
| rigoroses Modell | 16 |
| Datenbank | 17 |
| Formstempel | 101 |
| Drehmomentaufnehmer | 102 |
| Normalkraftaufnehmer | 103 |
| Pneumatikzylinder | 104 |
| Führungen | 105 |

| | |
|---|---|
| Führungsholme | 106 |
| Führungsplatte | 107 |
| Aufspannplatte | 108 |
| Formnest | 109 |
| Mitnehmer | 110 |
| Angussbuchse | 111 |
| Aufspannplatte | 112 |
| elastische Elemente | 113 |
| Plastifiziereinheit | 114 |
| Zahnriemen | 115 |
| Zahnriemenscheibe | 116 |
| Kupplung | 117 |
| Getriebe | 118 |
| Elektromotor | 119 |
| Prüfkörper | 120 |
| Anguss | 121 |
| Wölbung | 122 |
| planare Bereiche | 123 |
| neuronales Netz | 201 |
| neuronales Netz | 202 |
| neuronales Netz | 203 |
| neuronales Netz | 204 |
| Streckpunkt | 230 |
| Reißpunkt | 231 |
| Punkt | 232 |
| Datenbank | 240 |
| Ausgang | 241 |
| Ausgang | 243 |
| Ausgang | 244 |
| Programm | 245 |
| Bildschirm | 246 |
| Drucker | 247 |
| Eingang | 250 |
| Ausgang | 251 |
| Speicher | 252 |
| Speicher | 253 |
| Speicher | 254 |
| Ausgang | 255 |
| Programmmodul | 256 |
| Programmmodul | 257 |
| Programmmodul | 258 |
| Spannungs- Dehnungskurvengenerator | 259 |
| charakteristischer Punkt | 260 |
| charakteristischer Punkt (Endpunkt) | 261 |
| Zwischenpunkt (intermediärer Punkt) | 262 |
| Zwischenpunkt (intermediärer Punkt) | 263 |
| Zwischenpunkt (intermediärer Punkt) | 264 |
| Zwischenpunkt (intermediärer Punkt) | 265 |
| Zwischenpunkt (intermediärer Punkt) | 266 |
| Zwischenpunkt (intermediärer Punkt) | 267 |
| Zwischenpunkt (intermediärer Punkt) | 268 |
| intermediärer Punkt | 269 |
| Spannungs- Dehnungskurve | 280 |
| Spannungs- Dehnungskurve | 281 |
| charakteristischer Punkt | 284 |
| Spannungs- Dehnungskurve | 301 |
| Spannungs- Dehnungskurve | 302 |
| Spannungs- Dehnungskurve | 303 |

| | |
|---|---|
| Spannungs- Dehnungskurve | 304 |
| Spannungs- Dehnungskurve | 305 |
| Spannungs- Dehnungskurve | 306 |
| Kurve | 307 |
| Kurve | 308 |
| Kurve | 309 |
| Messpunkte | 320 |
| Punkt | 340 |
| Punkt | 341 |
| Punkt | 342 |
| Punkt | 343 |
| Punkt | 344 |
| Punkt | 345 |
| Punkt | 346 |
| Punkt | 347 |
| Kurve | 348 |
| Kurve | 349 |
| Kurvenverlauf | 360 |
| Kurvenverlauf | 361 |
| Kurvenverlauf | 362 |
| Kurve | 370 |
| Kurve | 371 |
| Kurve | 372 |
| Diagramm | 380 |
| Diagramm | 381 |
| Diagramm | 382 |
| Kurve | 383 |
| Kurve | 384 |
| Kurve | 385 |
| Kurve | 386 |
| Kurve | 387 |

**Patentansprüche**

1. Hybridmodell zur Bestimmung von mechanischen und/oder Verarbeitungseigenschaften eines Spritzgießformteils enthaltend ein neuronales Netzmodul (2) mit zumindest einem neuronalen Netz ($NN1,...NN_k$) zur Eingabe einer oder mehrerer Rezepturparameter und gegebenenfalls eines oder mehrerer anderer Parameter in das neuronale Netz und mit einem Ausgang zur Ausgabe zumindest eines Prognosewerts,

   sowie enthaltend zumindest ein rigoroses Modell (R1, R2, R3, R4, R5,...) mit mindestens einem Eingang zur Eingabe von einem oder mehrerer Parameter und/oder einem oder mehrerer Prognosewerte und mindestens einem Ausgang zur Ausgabe eines berechneten Werts hinsichtlich der mechanischen und/oder Verarbeitungseigenschaften besagten Spritzgießformteils,

   eine erste Datenbank (12) zur Speicherung einer Zuordnung zwischen Handelsprodukten und den jeweiligen Komponenten der Handelsprodukte,

   mindestens ein Mittel zur Eingabe von Handelsproduktnamen, die die Zusammensetzung des Spritzgießformteils spezifizieren, und gegebenenfalls einem oder mehreren anderen Parametern

   und

   mindestens ein Mittel zum Zugriff (11) auf die erste Datenbank,

   **dadurch gekennzeichnet, dass** die Bestimmung der mechanischen und/oder Verarbeitungseigenschaften des Spritzgießformteils auf Rezepturparametern, die über die erste Datenbank aus dem Handelsproduktnamen ermittelt werden, und gegebenenfalls einem oder mehreren anderen Parametern basiert.

2. Hybridmodell nach Anspruch 1 mit Mitteln zur Abbildung eines Eingangsvektors von Parametern (P1, P2, P3, P4, ... $P_i$) auf eine Teilmenge (PN1, PN2, PN3, ... $PN_j$) und mit Mitteln (4) zur Abbildung der Teilmenge auf entsprechende Eingänge der neuronalen Netze.

3. Hybridmodell nach einem der vorhergehenden Ansprüche mit einem neuronalen Netz zur Prognose eines Haftreibungskoeffizienten aus den Rezepturparametern.

4. Hybridmodell nach einem der vorhergehenden Ansprüche mit einem neuronalen Netz zur Prognose eines Gleitreibungskoeffizienten aus den Rezepturparametern.

5. Hybridmodell nach einem der Ansprüche 3 oder 4, wobei die Reibungskoeffizienten zum Training des entsprechenden neuronalen Netzes experimentell ermittelt werden.

6. Hybridmodell nach einem der vorhergehenden Ansprüche mit einem neuronalen Netz zur Prognose der Hauptkomponenten charakteristischer Punkte einer Spannungs- Dehnungs-Kurve aus einem oder mehrerer der folgenden Parameter: Rezeptur, Farbe, Bauteilgeometrie, Verarbeitungsbedingungen und/oder Prüfbedingungen.

7. Hybridmodell nach Anspruch 6 mit einem rigorosen Modell zur Rücktransformation der Hauptkomponenten der charakteristischen Punkte und mit einem Spannungs-Dehnungs-Kurven-Generator zur Erzeugung einer Kurve aus den rücktransformierten Hauptkomponenten der charakteristischen Punkte.

8. Hybridmodell nach einem der vorhergehenden Ansprüche mit einer Datenbank (17) zur Speicherung charakteristische Punkte für den direkten Zugriff auf die charakteristischen Punkte und mit einem Spannungs-Dehnungs-Kurven-Generator zur Erzeugung einer Kurve aus den rücktransformierten Hauptkomponenten der charakteristischen Punkte

9. Hybridmodell nach einem der vorhergehenden Ansprüche mit einem rigorosen Modell zur Ermittlung eines Zusammenhangs zwischen einer Dehnung und einer Spannung für eine Langzeitbelastung.

10. Hybridmodell nach Anspruch 9, bei dem die folgende Funktion in dem rigorosen Modell abgebildet ist:

$$\varepsilon(t,\sigma,T) = \frac{\sigma}{E(T)} + m(\sigma,T)\left(\frac{t}{t_0}\right)^{n(\sigma,T)}$$

wobei

$$m(\sigma) = a_1 \cdot \sinh\frac{\sigma}{\sigma_0 \cdot a_2}$$

und

$$n(\sigma) = b_0 + b_1\left(\frac{\sigma}{\sigma_0}\right) + b_2\left(\frac{\sigma}{\sigma_0}\right)^2$$

und wobei

$$\sigma(T,\varepsilon) = A_1 + A_2 + A_3 + A_4$$

mit

$$A_1 = c_1\varepsilon + c_2\varepsilon^3 + c_3\varepsilon^5 + c_4\ln\left(\varepsilon + \sqrt{\varepsilon^2 + 1}\right)$$

$$A_2 = c_5\varepsilon T + c_6\varepsilon T^3 + c_7\varepsilon T^5$$

$$A_3 = c_8\varepsilon^3 T + c_9\varepsilon^3 T^3 + c_{10}\varepsilon^3 T^5$$

$$A_4 = c_{11}\varepsilon^5 T + c_{12}\varepsilon^5 T^3 + c_{13}\varepsilon^5 T^5 .$$

**11.** Hybridmodell nach Anspruch 10 mit einer zweiten Datenbank zur Speicherung der Koeffizienten $c_1$ bis $c_{13}$, $a_1$, $a_2$, $b_0$, $b_1$ und $b_2$ für ein bestimmtes Material, vorzugsweise ein bestimmtes Handelsprodukt.

**12.** Verfahren zur Bestimmung einer Eigenschaft hinsichtlich der Herstellung und/oder der mechanischen Eigenschaften eines Spritzgießformteils mit folgenden Schritten:

- Auswahl einer Anzahl von Parametern,
- Eingabe der Parameter in ein Hybridmodell enthaltend ein neuronales Netzmodul (2) mit zumindest einem neuronalen Netz (NN1,...NN$_k$) zur Eingabe einer oder mehrerer Rezepturparameter und gegebenenfalls eines oder mehrerer anderer Parameter, in das neuronale Netz und mit einem Ausgang zur Ausgabe zumindest eines Prognosewerts,
sowie enthaltend zumindest ein rigoroses Modell (R1, R2, R3, R4, R5,...) mit mindestens einem Eingang zur Eingabe von einem oder mehrerer Parameter und/oder einem order mehrerer Prognosewerte und mindestens einem Ausgang zur Ausgabe eines berechneten Werts hinsichtlich der mechanischen und/oder Verarbeitungseigenschaften besagten Spritzgießformteils,
eine erste Datenbank (12) zur Speicherung einer Zuordnung zwischen Handelsprodukten und den jeweiligen Komponenten der Handelsprodukte,
mindestens ein Mittel zur Eingabe von Handelsproduktnamen, die die Zusammensetzung des Spritzgießformteils spezifizieren, und gegebenenfalls zur Eingabe eines oder mehrerer anderer Parameter, und
mindestens ein Mittel zum Zugriff (11) auf die erste Datenbank, wobei die Bestimmung der mechanischen und/oder Verarbeitungseigenschaften des Spritzgießformteils auf Rezepturparametern, die über die erste Datenbank aus dem Handelsproduktnamen ermittelt werden, und gegebenenfalls einem oder mehreren anderen Parametern basiert, nach einem der vorhergehenden Ansprüche und
- Ausgabe eines Prognosewerts und/oder eines berechneten Werts hinsichtlich zumindest einer der mechanischen und/oder Verarbeitungseigenschaften besagten Spritzgießformteils.

## Claims

**1.** Hybrid model for determining mechanical and/or processing properties of an injection-moulded part
comprising a neural network module (2) with at least one neural network (NN1,... NN$_k$) for inputting one or more recipe parameters and optionally one or more other parameters into the neural network and with an output for outputting at least one forecast value,
and comprising at least one rigorous model (R1, R2, R3, R4, R5,...) with at least one input for inputting one or more parameters and/or one or more forecast values and at least one output for outputting a calculated value with regard to the mechanical and/or processing properties of said injection-moulded part,
a first database (12) for storing a relationship between commercial products and the respective components of the commercial products,
at least one means for inputting names of commercial products which specify the composition of the injection-moulded part, and optionally for inputting one or more other parameters,

and

at least one means for accessing (11) the first database,
**characterized in that** the determination of the mechanical and/or processing properties of the injection-moulded part is based on recipe parameters which are determined via the first database from the names of commercial products and optionally one or more other parameters.

2. Hybrid model according to Claim 1, having means for mapping an input vector of parameters (P1, P2, P3, P4, ... $P_i$) onto a subset (PN1, PN2, PN3, ... $PN_j$) and having means (4) for mapping the subset onto corresponding inputs of the neural networks.

3. Hybrid model according to one of the preceding claims, having a neural network for forecasting a coefficient of static friction from the recipe parameters.

4. Hybrid model according to one of the preceding claims, having a neural network for forecasting the coefficient of sliding friction from the recipe parameters.

5. Hybrid model according to one of Claims 3 or 4, the coefficients of friction being determined experimentally for the purpose of training the corresponding neural network.

6. Hybrid model according to one of the preceding claims, having a neural network for forecasting the main elements of characteristic points of a stress-strain curve from one or more of the following parameters: recipe, colour, geometry of the part, processing conditions and/or test conditions.

7. Hybrid model according to Claim 6, having a rigorous model for inverse transformation of the main components of the characteristic points and having a stress-strain curve generator for generating a curve from the inversely transformed main components of the characteristic points.

8. Hybrid model according to one of the preceding claims, having a database (17) for storing characteristic points for direct access to the characteristic points, and having a stress-strain curve generator for generating a curve from the inversely transformed main components of the characteristic points.

9. Hybrid model according to one of the preceding claims, having a rigorous model for determining a relationship between a strain and a stress for an instance of long-term loading.

10. Hybrid model according to Claim 9, in which the following function is mapped in the rigorous model:

$$\varepsilon(t,\sigma,T) = \frac{\sigma}{E(T)} + m(\sigma,T)\left(\frac{t}{t_0}\right)^{n(\sigma,T)}$$

where

$$m(\sigma) = a_1 \cdot \sinh\frac{\sigma}{\sigma_0 \cdot a_2}$$

and

$$n(\sigma) = b_0 + b_1\left(\frac{\sigma}{\sigma_0}\right) + b_2\left(\frac{\sigma}{\sigma_0}\right)^2$$

and where

$$\sigma(T,\varepsilon) = A_1 + A_2 + A_3 + A_4$$

where

$$A_1 = c_1\varepsilon + c_2\varepsilon^3 + c_3\varepsilon^5 + c_4 \ln\left(\varepsilon + \sqrt{\varepsilon^2 + 1}\right)$$

$$A_2 = c_5\varepsilon T + c_6\varepsilon T^3 + c_7\varepsilon T^5$$

$$A_3 = c_8\varepsilon^3 T + c_9\varepsilon^3 T^3 + c_{10}\varepsilon^3 T^5$$

$$A_4 = c_{11}\varepsilon^5 T + c_{12}\varepsilon^5 T^3 + c_{13}\varepsilon^5 T^5.$$

11. Hybrid model according to Claim 10, having a second database for storing the coefficients $c_1$ to $c_{13}$, $a_1$, $a_2$, $b_0$, $b_1$ and $b_2$ for a specific material, preferably a specific commercial product.

12. Method for determining a property relating to the manufacture and/or the mechanical properties of an injection-moulded part having the following steps:

- selection of a number of parameters,
- inputting of the parameters into a hybrid model comprising a neural network module (2) with at least one neural network (NN1,... NN$_k$) for inputting one or more recipe parameters and optionally one or more other parameters into the neural network and with an output for outputting at least one forecast value,
and comprising at least one rigorous model (R1, R2, R3, R4, R5,...) with at least one input for inputting one or more parameters and/or one or more forecast values and at least one output for outputting a calculated value with regard to the mechanical and/or processing properties of said injection-moulded part,
a first database (12) for storing a relationship between commercial products and the respective components of the commercial products,
at least one means for inputting names of commercial products which specify the composition of the injection-moulded part, and optionally for inputting one or more other parameters,
and
at least one means for accessing (11) the first database, the determination of the mechanical and/or processing properties of the injection-moulded part being based on recipe parameters which are determined via the first database from the names of commercial products and optionally one or more other parameters, according to one of the preceding claims and
outputting a forecast value and/or a calculated value with regard to at least one of the mechanical and/or processing properties of said injection-moulded part.

**Revendications**

1. Modèle hybride servant à déterminer des particularités mécaniques et/ou de traitement d'une pièce moulée par injection,

comprenant un module de réseau neuronal (2) comportant au moins un réseau neuronal (NN1, ..., NN$_k$) servant

à introduire un ou plusieurs paramètres de recette et le cas échéant un ou plusieurs autres paramètres dans le réseau neuronal et comportant une sortie servant à délivrer au moins une valeur prévisionnelle,

comprenant également au moins un modèle rigoureux (R1, R2, R3, R4, R5, ...) comportant au moins une entrée servant à introduire un ou plusieurs paramètres et/ou une ou plusieurs valeurs prévisionnelles ainsi qu'au moins une sortie servant à délivrer une valeur calculée relative aux particularités mécaniques et/ou de traitement de ladite pièce moulée par injection,

une première banque de données (12) servant à mettre en mémoire une correspondance entre des produits commerciaux et les composants respectifs des produits commerciaux,

au moins un moyen servant à introduire des noms de produits commerciaux qui spécifient la composition de la pièce moulée par injection et, le cas échéant, un ou plusieurs autres paramètres

et

au moins un moyen d'accès (11) à la première banque de données,

**caractérisé en ce que** la détermination des particularités mécaniques et/ou de traitement de la pièce moulée par injection se fonde sur des paramètres de recette qui sont déterminés à partir des noms de produits commerciaux par l'intermédiaire de la première banque de données et, le cas échéant, sur un ou plusieurs autres paramètres.

2. Modèle hybride selon la revendication 1, comportant des moyens d'application d'un vecteur d'entrée de paramètres ($P1, P2, P3, P4, ..., P_i$) sur un sous-ensemble ($PN1, PN2, PN3, ..., PN_j$) et comportant des moyens (4) d'application du sous-ensemble sur des entrées correspondantes des réseaux neuronaux.

3. Modèle hybride selon l'une des revendications précédentes, comportant un réseau neuronal servant à prévoir un coefficient de frottement statique à partir des paramètres de recette.

4. Modèle hybride selon l'une des revendications précédentes, comportant un réseau neuronal servant à prévoir un coefficient de frottement glissant à partir des paramètres de recette.

5. Modèle hybride selon l'une des revendications 3 ou 4, dans lequel les coefficients de frottement sont déterminés de manière expérimentale pour entraîner le réseau neuronal correspondant.

6. Modèle hybride selon l'une des revendications précédentes, comportant un réseau neuronal servant à prévoir les composants principaux de points caractéristiques d'une courbe tension-allongement à partir d'un ou de plusieurs paramètres parmi les suivants : recette, couleur, géométrie de pièce, conditions de traitement et/ou conditions d'essai.

7. Modèle hybride selon la revendication 6, comportant un modèle rigoureux servant à la transformation inverse des composants principaux des points caractéristiques et comportant un générateur de courbes tension-allongement servant à produire une courbe à partir des composants principaux des points caractéristiques ayant subi une transformation inverse.

8. Modèle hybride selon l'une des revendications précédentes, comportant une banque de données (17) servant à mettre des points caractéristiques en mémoire afin d'accéder directement aux points caractéristiques et comportant un générateur de courbes tension-allongement servant à produire une courbe à partir des composants principaux des points caractéristiques ayant subi une transformation inverse.

9. Modèle hybride selon l'une des revendications précédentes, comportant un modèle rigoureux servant à déterminer un rapport entre un allongement et une tension pour une charge de longue durée.

10. Modèle hybride selon la revendication 9, dans lequel la fonction suivante est appliquée dans le modèle rigoureux :

$$\varepsilon(t,\sigma,T) = \frac{\sigma}{E(T)} + m(\sigma,T)\left(\frac{t}{t_0}\right)^{n(\sigma,T)}$$

où

$$m(\sigma) = a_1 \cdot \sinh \frac{\sigma}{\sigma_0 \cdot a_2}$$

et

$$n(\sigma) = b_0 + b_1 \left( \frac{\sigma}{\sigma_0} \right) + b_2 \left( \frac{\sigma}{\sigma_0} \right)^2$$

et où

$$\sigma(T, \varepsilon) = A_1 + A_2 + A_3 + A_4$$

avec

$$A_1 = c_1 \varepsilon + c_2 \varepsilon^3 + c_3 \varepsilon^5 + c_4 \ln\left( \varepsilon + \sqrt{\varepsilon^2 + 1} \right)$$

$$A_2 = c_5 \varepsilon T + c_6 \varepsilon T^3 + c_7 \varepsilon T^5$$

$$A_3 = c_8 \varepsilon^3 T + c_9 \varepsilon^3 T^3 + c_{10} \varepsilon^3 T^5$$

$$A_4 = c_{11} \varepsilon^5 T + c_{12} \varepsilon^5 T^3 + c_{13} \varepsilon^5 T^5.$$

11. Modèle hybride selon la revendication 10, comportant une deuxième banque de données servant à mettre en mémoire les coefficients $C_1$ à $C_{13}$, $a_1$, $a_2$, $b_0$, $b_1$ et $b_2$ relatifs à une matière déterminée, de préférence à un produit commercial déterminé.

12. Procédé de détermination d'une particularité de fabrication et/ou des particularités mécaniques d'une pièce moulée par injection, lequel procédé comporte les étapes suivantes :

- choix d'un certain nombre de paramètres,
- introduction des paramètres dans un modèle hybride comprenant un module de réseau neuronal (2) comportant au moins un réseau neuronal ($NN1$, ..., $NN_k$) servant à introduire un ou plusieurs paramètres de recette et le cas échéant un ou plusieurs autres paramètres dans le réseau neuronal et comportant une sortie servant à délivrer au moins une valeur prévisionnelle,
comprenant également au moins un modèle rigoureux (R1, R2, R3, R4, R5, ...) comportant au moins une entrée servant à introduire un ou plusieurs paramètres et/ou une ou plusieurs valeurs prévisionnelles ainsi qu'au moins une sortie servant à délivrer une valeur calculée relative aux particularités mécaniques et/ou de traitement de ladite pièce moulée par injection,
une première banque de données (12) servant à mettre en mémoire une correspondance entre des produits commerciaux et les composants respectifs des produits commerciaux,
au moins un moyen servant à introduire des noms de produits commerciaux qui spécifient la composition de la pièce moulée par injection et, le cas échéant, servant à introduire un ou plusieurs autres paramètres
et
au moins un moyen d'accès (11) à la première banque de données, la détermination des particularités mécaniques et/ou de traitement de la pièce moulée par injection se fondant sur des paramètres de recette qui sont déterminés à partir des noms de produits commerciaux par l'intermédiaire de la première banque de données et, le cas échéant, sur un ou plusieurs autres paramètres, selon l'une des revendications précédentes, et
- délivrance d'une valeur prévisionnelle et/ou d'une valeur calculée relative à l'une au moins des particularités mécaniques et/ou de traitement de ladite pièce moulée par injection.

Fig. 1

| Handelsprodukt | Komponente1 | Komponente2 | ⋯ |
|---|---|---|---|
| | | | |
| | | | |
| | | | |

EP 1 253 491 B1

Fig. 2

EP 1 253 491 B1

| vft |
| ve |
| s |
| $t_m$ |
| $t_w$ |
| ... |
| $P_i$ |

| Handelsprodukt | Komponente 1 | Komponente 2 | ... |
|---|---|---|---|
| | | | |
| | | | |

12

PN1
PN2
PN3
...
PNj

3

DB Zugriff — 11

Mapping — 4

5

NN1 — rho
NN2 — zs
NN3 — $t_s$
NN4 — $t_e$
NN5 — $\mu G$
NN6 — $\mu H$
NN7 — HK
NNk — ANk

2

Training

zff — 7
mft — 8
aeff — 9
zk — 10

HK Rück — 13
σ-ε-Generator — 14

DB — 17

Koeffizienten — 15

$\varepsilon(t,\sigma,T)$ — 16

A1
A2
A3
A4
A5
A6
A7
A8

AI

6

28

# Fig. 3

**Fig. 4**

**Fig. 5**

**Fig. 6**

90°C
Standardeinstellung

—▲— µ – Haft
—◆— µ – Gleit
— Standardabweichung

Haft-und Gleitreibungskoeffizient [-]

Werkzeugtemperatur [°C]

**Fig. 7**

100 N/cm^2
Standardeinstellung

—▲— µ –Haft
—◆— µ –Gleit
— Standardabweichung

Haft-und Gleitreibungskoeffizient [-]

Flächenpressung [N/cm^2]

## Fig. 8

**Fig. 9**

# Fig. 10

| | |
|---|---|
| Messung einer Anzahl von Spannungs-Dehnungs-Kurven bei Variation von Parametern | 220 |
| Zuordnung der Spannungs-Dehnungs-Kurven zu bestimmten Typen | 221 |
| Auswahl von charakteristischen Punkten je nach Typ | 222 |
| Hauptkomponenten Transformation der charakteristischen Punkte/Typen | 223 |

225

226

| | |
|---|---|
| Trainieren der typspezifischen neuronalen Netze mit den hauptkomponententransformierten charakteristischen Punkten als Ausgangsgrössen | Trainieren des neuronales Netz zur Bestimmung des Kurven-Typs mit dem Kurven-Typ als Ausgangsgrösse |

| | |
|---|---|
| Parallelschaltung der typspezifischen neuronalen Netze und neuronales Netz zur Bestimmung des Kurven-Typs | 227 |
| Funktion zur Auswahl eines der typspezifischen neuronalen Netze basierend auf dem Ausgang des neuronales Netzes zur Bestimmung des Kurven-Typs | 228 |

# Fig. 11

| Messungen (Variation von Parametern) | | Zuordnung der Kurvenform zu Typ | | Auswahl charakteristischer Punkte | | Hauptkomponenten-Transformation der charakteristischen Punkte/Typen |

230  232  231

220  221  222  223

EP 1 253 491 B1

**F i g. 12**

201

Neuronales Netz
Typ a

241

Erwartungswert:
charakteristische
Punkte Typ a

240

| Datenbank | | | |
|---|---|---|---|
| Kurve Nr. | Typ | Parameter | HK charakter. Punkte |
| | | | |
| | | | |
| | | | |
| | | | |
| | | | |
| | | | |
| | | | |

202

Neuronales Netz
Typ b

242

Erwartungswert: HK
charakteristische
Punkte Typ b

203

Neuronales Netz
Typ c

243

Erwartungswert: HK
charakteristische
Punkte Typ c

. . .

N

Neuronales Netz
Typ N

Erwartungswert: HK
charakteristische
Punkte Typ N

245

Programm

204

Neuronales Netz
zur Bestimmung
des Typs

244

Erwartungswert: Typ

Fig. 13

Fig. 14

Fig. 15

# Fig. 16

Lineare Transformation in D bis zum
2. Stützpunkt,

D = D - D2 , für D < D2

Logarithmische Transformation
nach dem 2. Stützpunkt,

D = ln(1 + D - D2) , für D > D2

EP 1 253 491 B1

## Fig.17

## Fig.18

$\sigma = const$

$\varepsilon$

Dehnung

320

320

320

320

320

320

320

320

$m\,t^{n}$

$\varepsilon_0$

Zeit

t

$$\varepsilon_0 = \frac{\sigma}{E}$$

## Fig.19

$\varepsilon$

Ausgleichkurve: $\varepsilon_{app}(t)$

$\delta_3$

$\delta_k$

320

$\delta_1$

$\delta_2$

320

$$\sum_{i=1}^{k} \delta_i^{\,2} = Min$$

t

$$\varepsilon_{app}(t) = \varepsilon_0 + m(t/t_0)^n$$

## Fig.20

$$\varepsilon(t) = \frac{\sigma}{E} + m\left(\frac{t}{t_0}\right)^n$$

$$\varepsilon(t,\sigma) = \frac{\sigma}{E} + m(\sigma)\left(\frac{t}{t_0}\right)^{n(\sigma)}$$

## Fig. 21

$$T_1 < T_2 < T_3$$

$$m(\sigma) = a_1 \cdot \sinh\frac{\sigma}{\sigma_0}a_2$$

$$n(\sigma) = b_0 + b_1\left(\frac{\sigma}{\sigma_0}\right) + b_2\left(\frac{\sigma}{\sigma_0}\right)^2$$

## Fig.22

## Fig.23

# Fig.24

# Fig.25

$\varepsilon(t) \longrightarrow$ | 390 m($\sigma$) n($\sigma$) | $\longrightarrow \varepsilon(t,\sigma) \longrightarrow$ | 391 m($\sigma$,T) n($\sigma$,T) | $\longrightarrow \varepsilon(t,\sigma,T)$

Spannungsabhängigkeit der Parameter

Temperaturabhängigkeit
der Spannungsparameter

EP 1 253 491 B1

# Fig. 26

Ermittlung der Koeffizienten $c_1$ bis $c_{13}$ durch Kurzzeitzugversuche für

$$\sigma(T,\varepsilon) = A_1 + A_2 + A_3 + A_4$$

400

---

Ermittlung der Koeffizienten m, n in Abhängigkeit der Spannung für verschiedene Temperaturen $T_1$, $T_2$, $T_3$ ... durch Zeitstandversuche:

$$\varepsilon(t,\sigma) = \frac{\sigma}{E} + m(\sigma)\left(\frac{t}{t_0}\right)^{n(\sigma)}$$

401

---

Ermittlung je eines spannungsabhängigen Verlaufs $m(\sigma)$ bzw. $n(\sigma)$ für jede der betrachteten Temperaturen $T_1$, $T_2$, $T_3$ ...

402

---

Ermittlung der Koeffizienten $a_1$, $a_2$, $b_0$, $b_1$, $b_2$ jeweils für die verschiedenen Temperaturen $T_1$, $T_2$, $T_3$ ... für

$$m(\sigma) = a_1 \cdot \sinh \frac{\sigma}{\sigma_0 \cdot a_2}$$

$$n(\sigma) = b_0 + b_1\left(\frac{\sigma}{\sigma_0}\right) + b_2\left(\frac{\sigma}{\sigma_0}\right)^2$$

403

---

Ermittlung von Funktionen $a_1 = f_1(T)$; $a_2 = f_2(T)$; $b_0 = f_3(T)$; $b_1 = f_4(T)$; $b_2 = f_5(T)$

404

---

Ermittlung von $E(T)$ für kleines $\varepsilon$ aus $\sigma(T,\varepsilon) = A_1 + A_2 + A_3 + A_4 = E(T) \cdot \varepsilon$

405

---

Kurvenschar $\quad \varepsilon(t,\sigma,T) = \dfrac{\sigma}{E(T)} + m(\sigma,T)\left(\dfrac{t}{t_0}\right)^{n(\sigma,T)}$

406

# Fig.27

| Anpassungszeit [h] | $0-10^5$ | 0-1000 | 20-1000 |
|---|---|---|---|
| Abwelchung bezogen auf Originalkurve [%] | — | 24 | 3 |

Belastungshöhe: 20 N/mm$^2$

308

P

307

309

Anpassungszeit [h]

0-1000
$0-10^5$
20-1000

Dehnung

Belastungsdauer

EP 1 253 491 B1

Fig. 28

# Fig. 29

| Ermittlungen von Materialeigenschaften und Parametern des Herstellungsprozesses bei Variation von Eingangsparameter | 30 |

| Erzeugung einer Datenbank (Eingangsparameter;Materialeigenschaften, Parameter des Herstellungsprozesses) | 31 |

# Fig. 30

| m:= 1 | 41 |

| Training $NN_m$ mit relevanten Eingangsparametern bezüglich des Ausgangs des $NN_m$ | 42 |

| m:=m+1 | 43 |

EP 1 253 491 B1